# EUROPÄISCHE PATENTSCHRIFT

(11) **EP 3 163 138 B1**
(45) Veröffentlichungstag und Bekanntmachung des Hinweises auf die Patenterteilung: **06.06.2018**
(21) Anmeldenummer: 15191452.0
(22) Anmeldetag: 26.10.2015
(51) Int. Cl.: F16K 31/524

(54) **VENTILANORDNUNG**
VALVE ASSEMBLY
SYSTÈME DE VANNES

(43) Veröffentlichungstag der Anmeldung: 03.05.2017
(73) Patentinhaber: FESTO AG & Co. KG, 73734 Esslingen (DE)
(72) Erfinder: Schuppler, Swen, 70174 Stuttgart (DE); Paech, Stephan, 73732 Esslingen (DE); Wenske, Eduard, 70806 Kornwestheim (DE)
(74) Vertreter: Patentanwälte Magenbauer & Kollegen Partnerschaft mbB

(56) Entgegenhaltungen:
- EP-A2- 0 787 935
- WO-A1-2006/045317
- DE-A1-102012 106 281
- DE-B- 1 249 041
- US-A- 1 509 862

## Beschreibung

Die Erfindung betrifft eine Ventilanordnung, mit mindestens einem mechanisch betätigbaren Ventil, das ein in einem Ventilgehäuse angeordnetes, unter Ausführung einer linearen Umschaltbewegung in Achsrichtung einer Hauptachse zwischen verschiedenen Schaltstellungen umschaltbares Ventilglied aufweist und das über eine Betätigungseinrichtung verfügt, die ein mechanisch zu einer rotativen Eingangsbewegung um eine zu der Hauptachse rechtwinkelige Drehachse antreibbares Betätigungsglied aufweist, das zur Erzeugung der linearen Umschaltbewegung des Ventilgliedes mit dem Ventilglied bewegungsgekoppelt ist und einen die rotative Eingangsbewegung mitmachenden Abtriebsabschnitt aufweist, der mindestens eine zur Erzeugung der Umschaltbewegung mit dem Ventilglied antriebsmäßig zusammenwirkende, bezüglich der Drehachse exzentrisch angeordnete Kraftabgabestruktur aufweist, wobei die Betätigungseinrichtung einen kraftübertragend zwischen den Abtriebsabschnitt und das Ventilglied eingegliederten, in Achsrichtung der Hauptachse relativ zum Ventilgehäuse bewegbaren Kulissenschieber aufweist, der mindestens eine Antriebskulisse aufweist, mit der eine Kraftabgabestruktur des Abtriebsabschnittes des Betätigungsgliedes zur Erzeugung einer von der rotativen Eingangsbewegung abgeleiteten und in Achsrichtung der Hauptachse orientierten linearen Antriebsbewegung des Kulissenschiebers zusammenwirkt, aus der die Umschaltbewegung des Ventilgliedes resultiert, wobei durch unterschiedliche Gestaltung der Antriebskulisse des Kulissenschiebers ein bei der rotativen Eingangsbewegung des Betätigungsgliedes unterschiedliches Bewegungsverhalten des Kulissenschiebers und somit des durch den Kulissenschieber angetriebenen Ventilgliedes hervorrufbar ist.

Eine aus der DE 84 36 606 U1 bekannte Ventilanordnung enthält ein mechanisch betätigbares Ventil, das als ein Rollenhebelventil ausgebildet ist. Ein Ventilglied des Ventils kann im Rahmen einer linearen Umschaltbewegung in verschiedenen Schaltstellungen positioniert werden. Die Umschaltbewegung ist durch eine Betätigungseinrichtung hervorrufbar, die über ein durch einen Nockenkörper mechanisch betätigbares Betätigungsglied verfügt, bei dem es sich um einen verschwenkbar gelagerten Rollenhebel handelt. Bei seiner Betätigung führt der Rollenhebel eine rotative Eingangsbewegung bezüglich eines am Ventilgehäuse angebrachten Halters aus und drückt dabei auf das Ventilglied, das infolgedessen verschoben wird. Das Bewegungsverhalten des Ventilgliedes hängt von der Gestaltung des externen Nockenkörpers ab.

Aus der US 1 509 862 A ist eine Ventilanordnung der eingangs genannten Art bekannt, die ein Ventilglied aufweist, an dem stirnseitig ein zylindrischer Körper angebracht ist, der über schräge Oberflächen verfügt, mit denen er an einem drehbaren Nocken anliegt. Durch Verdrehen des Nockens einer Betätigungseinrichtung, der an dem zylindrischen Körper anliegt, kann eine lineare Umschaltbewegung des Ventilgliedes hervorgerufen werden.

Die DE 12 49 041 B offenbart eine mit mehreren Ventilen ausgestattete Steuereinrichtung, wobei jedes Ventil ein Ventilglied aufweist, das an einem rotativ antreibbaren Nocken anliegt. Bei der Rotation des Nockens wird das zugeordnete Ventilglied zu einer Linearbewegung angetrieben. Die Nockenformen der Nocken sind entsprechend dem gewünschten Durchfluss ausgewählt.

Der Erfindung liegt die Aufgabe zugrunde, Maßnahmen zu treffen, mit denen sich das Bewegungsverhalten des Ventilgliedes eines mechanisch betätigbaren Ventils einfach und kostengünstig beeinflussen lässt.

Zur Lösung dieser Aufgabe ist in Verbindung mit den eingangs genannten Merkmalen vorgesehen, dass die Ventilanordnung mehrere Kulissenschieber mit voneinander abweichend gestalteten Antriebskulissen enthält, die abhängig vom Ventiltyp des mechanisch betätigbaren Ventils alternativ verwendbar sind, um ein unterschiedliches Bewegungsverhalten des jeweils zugehörigen Ventilgliedes hervorzurufen.

Erfindungsgemäß wird die Umschaltbewegung des Ventilgliedes dadurch hervorgerufen, dass die rotative Eingangsbewegung des Betätigungsgliedes durch einen Kulissenmechanismus auf das Ventilglied übertragen wird. Der Kulissenmechanismus enthält einen in Achsrichtung der Hauptachse verschiebbaren Schieber, der mit einer Antriebskulisse ausgestattet ist und daher als Kulissenschieber bezeichnet wird. Durch das mit dem Kulissenschieber zusammenwirkende Betätigungsglied ist der Kulissenschieber zu einer linearen Antriebsbewegung antreibbar, die die Umschaltbewegung des Ventilgliedes zur Folge hat. Zum Zusammenwirken mit dem Kulissenschieber weist das Betätigungsglied einen die rotative Eingangsbewegung mitmachenden Abtriebsabschnitt auf, der über mindestens eine exzentrisch zur Drehachse angeordnete Kraftabgabestruktur verfügt, die bei der rotativen Eingangsbewegung um die Drehachse herum verschwenkt wird, wobei sie mit der Antriebskulisse des Kulissenschiebers kooperiert. Je nach Ausgestaltung der Antriebskulisse ergibt sich für den Kulissenschieber und folglich auch das mit dem Kulissenschieber bewegungsgekoppelte Ventilglied ein unterschiedliches Bewegungsverhalten. Insbesondere kann durch unterschiedliche Gestaltungen der Antriebskulisse auf den Hub der linearen Umschaltbewegung des Ventilgliedes Einfluss genommen werden, sodass abhängig von der Formgebung der Antriebskulisse unterschiedliche Ventilhübe realisierbar sind. Auf diese Weise können beispielsweise über einen relativ kleinen Ventilhub verfügende Sitzventile und einen relativ großen Ventilhub aufweisende Kolbenschieberventile mit ein und derselben Bauart von Betätigungseinrichtung ausgestattet werden, die zur Anpassung des Ventilhubes mit Kulissenschiebern ausgestattet sind, die sich in der Ausgestaltung ihrer Antriebskulisse voneinander unterscheiden.

Seitens des Betätigungsgliedes kann ein und dieselbe Kraftübertragungsstruktur zum alternativen Zusammenwirken mit den unterschiedlichen Antriebskulissen genutzt werden. Dies kann beispielsweise dadurch geschehen, dass die Einbauposition des Betätigungsgliedes verändert wird oder dass die Montageposition der Kraftübertragungsstruktur am Betätigungsglied variabel ist. Es besteht aber auch die Möglichkeit, das Betätigungsglied mit mehreren unterschiedlich positionierten Kraftübertragungsstrukturen auszustatten, die für das Zusammenwirken mit den Antriebskulissen unterschiedlicher Kulissenschieber ausgebildet sind und die in diesem Zusammenhang alternativ nutzbar sind, und zwar abhängig von der konkreten Ausgestaltung mit oder ohne Veränderung der Einbauposition des Betätigungsgliedes.

Die Ventilanordnung enthält mehrere Kulissenschieber mit untereinander abweichend gestalteten Antriebskulissen, die abhängig vom Ventiltyp des bereitzustellenden mechanisch betätigbaren Ventils verwendbar sind. Die Ventilanordnung kann so beispielsweise mehrere mechanisch betätigbare Ventile unterschiedlichen Ventiltyps enthalten, die sich in der Ausgestaltung des Kulissenschiebers voneinander unterscheiden, um ein voneinander abweichendes Bewegungsverhalten des jeweils zugehörigen Ventilgliedes hervorzurufen. Man kann auch beim Zusammenbau eines einzigen Ventils der Ventilanordnung durch ausgewählte Verwendung eines Kulissenschiebers der mehreren zur Verfügung stehenden Kulissenschieber die Betriebsweise des Ventils beeinflussen.

Vorteilhafte Weiterbildungen der Erfindung gehen aus den Unteransprüchen hervor.

Der Abtriebsabschnitt des Betätigungsgliedes ist zweckmäßigerweise mit mehreren Kraftabgabestrukturen ausgestattet, die zur Bildung unterschiedlicher Ventiltypen des mechanisch betätigbaren Ventils bedarfsgemäß mit jeweils einem von mehreren Kulissenschiebern kombinierbar sind, wobei sich diese Kulissenschieber in der Ausgestaltung ihrer Antriebskulisse voneinander unterscheiden.

Vorzugsweise ist das Betätigungsglied mit mindestens zwei und vorzugsweise mit genau zwei Kraftabgabestrukturen ausgestattet, die zur besseren Unterscheidung als erste Kraftabgabestruktur und als zweite Kraftabgabestruktur bezeichnet werden. Diese mehreren Kraftabgabestrukturen sind exzentrisch zur Drehachse des Betätigungsgliedes am Abtriebsabschnitt angeordnet. Die Ventilanordnung enthält ferner wenigstens zwei und bevorzugt genau zwei Kulissenschieber, die zur besseren Unterscheidung als erster Kulissenschieber und als zweiter Kulissenschieber bezeichnet werden und die jeweils eine Antriebskulisse aufweisen, wobei sich diese Antriebskulissen in der Formgebung voneinander unterscheiden. Um zwei unterschiedliche Ventiltypen des mechanisch betätigbaren Ventils der Ventilanordnung zu erhalten, besteht die vorteilhafte Möglichkeit, ein und denselben Typ von Betätigungsglied wahlweise in Kombination mit dem ersten Kulissenschieber oder in Kombination mit dem zweiten Kulissenschieber einzusetzen, wobei bei der Kombination mit dem ersten Kulissenschieber die erste Kraftübertragungsstruktur und bei der Kombination mit dem zweiten Kulissenschieber die zweite Kraftübertragungsstruktur zum Einsatz kommt. Vorzugsweise geschieht die Auswahl der bezogen auf den jeweiligen Ventiltyp genutzten Kraftabgabestruktur dadurch, dass der Abtriebsabschnitt in bezüglich der Drehachse des Betätigungsgliedes unterschiedlichen Drehwinkelpositionen im Ventilgehäuse installierbar oder installiert ist.

Die mehreren Kraftabgabestrukturen sind zweckmäßigerweise bezogen auf die Längsrichtung der Drehachse des Betätigungsgliedes auf gleicher axialer Höhe angeordnet, wobei sie dort in der Umfangsrichtung der Drehachse versetzt zueinander angeordnet sind.

Die Formgebung der Kraftabgabestruktur ist so auf die Formgebung der zugeordneten Antriebskulisse abgestimmt, dass stets der gewünschte Antriebskontakt gewährleistet ist. Eine bevorzugt gestaltete Kraftabgabestruktur verfügt über einen zylindrischen Querschnitt.

Um ein optimales Zusammenwirken des Betätigungsgliedes mit dem Kulissenschieber zu ermöglichen, ist es vorteilhaft, wenn der Kulissenschieber eine Aussparung aufweist, in die das Betätigungsglied mit seinem Abtriebsabschnitt quer zur Achsrichtung der Hauptachse hineinragt. Dabei fungiert eine Randfläche der Aussparung als mit dem Abtriebsabschnitt zusammenwirkende Antriebskulisse.

Eine vorteilhafte Ausgestaltung sieht vor, dass die Antriebskulisse von einem zumindest partiell bogenförmig gekrümmten Flächenabschnitt der Randfläche der Aussparung gebildet ist. An diesem bogenförmig gekrümmten Flächenabschnitt liegt die zugeordnete Kraftübertragungsstruktur an, die an dem Flächenabschnitt entlanggleitet, wenn das Betätigungsglied die rotative Eingangsbewegung ausführt. Dabei überträgt die Kraftabgabestruktur auf den Kulissenschieber eine Antriebskraft, durch die der Kulissenschieber zu der Antriebsbewegung veranlasst wird. Durch Wahl eines entsprechenden Verlaufes des gekrümmten Flächenabschnittes lässt sich das Bewegungsverhalten des Kulissenschiebers und mithin des Ventilgliedes vorgeben, wobei sich ein linearer oder auch ein nichtlinearer Zusammenhang zwischen dem Drehwinkel des Betätigungsgliedes und dem Hub des Kulissenschiebers verwirklichen lässt.

Eine weitere Gestaltungsmöglichkeit für die Antriebskulisse sieht eine kerbenartige Vertiefung in der Randfläche der Aussparung vor, in die die zugeordnete Kraftabgabestruktur eingreift, sodass bei beiden Drehrichtungen des Betätigungsgliedes eine Antriebskraft auf den Kulissenschieber ausübbar ist und folglich der Kulissenschieber bei Bedarf in beiden axialen Richtungen aktiv verlagerbar ist. Dies ist insbesondere dann von Vorteil, wenn ein Ventiltyp realisiert werden soll, der über ein multistabiles und bevorzugt bistabiles Umschaltverhalten verfügt. Bei einem Ventil des monostabilen Typs muss durch das Zusammenwirken zwischen der Kraftabgabestruktur und der Antriebskulisse nur in einer Achsrichtung der Hauptachse eine Antriebskraft übertragbar sein, wenn für die Erzeugung einer entgegengesetzten Bewegung eine Federeinrichtung vorgesehen ist.

Mindestens ein mechanisch betätigbares Ventil der Ventilanordnung ist bevorzugt vom Typ eines Sitzventils, bei dem das Ventilglied mit mindestens einem axial, das heißt in Richtung der Umschaltbewegung des Ventilgliedes orientierten Ventilsitz zusammenwirkt.

Mindestens ein mechanisch betätigbares Ventil der Ventilanordnung ist zweckmäßigerweise vom Typ eines Kolbenschieberventils, bei dem das Ventilglied mit mindestens einem bezüglich der Richtung der Umschaltbewegung des Ventilgliedes radial orientierten Ventilsitz zusammenwirkt.

Durch entsprechende Auswahl des Kulissenschiebers können gleichartige Betätigungseinrichtungen sowohl im Zusammenhang mit einem Sitzventil als auch im Zusammenhang mit einem Kolbenschieberventil genutzt werden, was aufgrund der geringen Anzahl unterschiedlicher Komponenten eine kostengünstige Herstellung und Montage gestattet.

Zur Aufbringung der die Eingangsbewegung hervorrufenden Betätigungskraft ist das Betätigungsglied zweckmäßigerweise mit einem radial von der Drehachse abstehenden Handhebel ausgestattet. Auf diese Weise handelt es sich bei dem mechanisch betätigbaren Ventil um ein manuell betätigbares Handhebelventil. Alternativ besteht allerdings auch die Möglichkeit, das Betätigungsglied zur anderweitigen Einleitung der zur Erzeugung der rotativen Eingangsbewegung erforderlichen Betätigungskraft auszubilden und es beispielsweise mit einer mechanischen Schnittstelle auszustatten, die den Anbau einer elektrisch und/oder mittels Fluidkraft betätigbaren Antriebseinrichtung gestattet.

Der Handhebel ist zweckmäßigerweise an einer Betätigungsstange des Betätigungsgliedes befestigt, die drehfest in einen mit dem Ventilglied bewegungsgekoppelten hülsenförmigen Abtriebskörper des Betätigungsgliedes eingesteckt ist, der den Abtriebsabschnitt bildet. Alternativ können Betätigungsstange und Abtriebsabschnitt auch einstückig miteinander ausgeführt sein.

Zweckmäßigerweise ist das Betätigungsglied mit einem radial abstehenden Anschlagelement ausgestattet, das durch Zusammenwirken mit mindestens einem am Ventilgehäuse angeordneten Gegenanschlag mindestens eine End-Drehposition des Betätigungsgliedes vorgeben kann. Auf diese Weise lässt sich insbesondere bei manueller Betätigung und ohne eine Überwachungssensorik ein sehr genaues Umschalten des mechanisch betätigbaren Ventils verwirklichen. Bei einem mehrteiligen Aufbau des Betätigungsgliedes kann das Anschlagelement stiftförmig ausgebildet sein und gleichzeitig dazu dienen, eine Betätigungsstange des Betätigungsgliedes und einen auf der Betätigungsstange sitzenden Abtriebskörper zur Vermeidung von Relativbewegungen gegenseitig zu sichern.

Es ist von Vorteil, wenn mindestens eine, bei Bedarf auch mehrere Schaltstellungen des Ventilgliedes lösbar fixierbar sind, zu welchem Zweck die Betätigungseinrichtung vorzugsweise mit einem geeigneten Rastmechanismus ausgestattet ist. Der Rastmechanismus enthält bevorzugt zwei zu der Drehachse koaxiale erste und zweite Rastelemente, die an ihren einander axial zugewandten Stirnseiten über miteinander kooperierende erste und zweite Rastmittelstrukturen verfügen, die zwecks gegenseitigem Eingriff durch Federmittel ständig axial aneinander angedrückt sind. Das die erste Rastmittelstruktur aufweisende erste Rastelement ist drehfest am Ventilgehäuse angeordnet, während das mit der zweiten Rastmittelstruktur ausgestattete zweite Rastelement drehfest derart am Betätigungsglied angeordnet ist, dass es dessen rotative Eingangsbewegung jeweils mitmacht. Bei der Ausführung der rotativen Eingangsbewegung können die beiden Rastmittelstrukturen aneinander abgleiten, wobei wenigstens eine der beiden Rastelemente axial beweglich ist, was durch Federmittel gewährleistet ist, die das betreffende Rastelement elastisch nachgiebig mit dem anderen Rastelement axial verspannen.

Das Ventilgehäuse der Ventilanordnung ist bevorzugt mehrteilig ausgebildet. Es umfasst insbesondere zwei Gehäuseteile, wobei das erste Gehäuseteil das Ventilglied aufnimmt und das zweite Gehäuseteil ein Gehäuse der Betätigungseinrichtung darstellt, in dem das Betätigungsglied drehbar gelagert ist.

Nachfolgend wird die Erfindung anhand der beiliegenden Zeichnung näher erläutert. In dieser zeigen:
- Figur 1: in perspektivischer Darstellung ein erstes Ausführungsbeispiel eines mechanisch betätigbaren Ventils der erfindungsgemäßen Ventilanordnung,
- Figur 2: das Ventil aus Figur 1 in einem Längsschnitt gemäß Schnittlinie II-II aus Figur 4 in einer ersten Schaltstellung des Ventilgliedes,
- Figur 3: das Ventil aus Figur 1 im Längsschnitt gemäß Schnittlinie III-III aus Figur 5 in einer zweiten Schaltstellung des Ventilgliedes,
- Figur 4: eine teilweise geschnittene Seitenansicht gemäß Schnittlinie IV-IV aus Figur 2,
- Figur 5: eine teilweise geschnittene Seitenansicht gemäß Schnittlinie V-V aus Figur 3,
- Figur 6: eine teilweise geschnittene Rückansicht gemäß Schnittlinie VI-VI aus Figur 4,
- Figur 7: eine teilweise geschnittene Rückansicht gemäß Schnittlinie VII-VII aus Figur 4,
- Figur 8: eine Draufsicht des Ventils gemäß Blickrichtung gemäß Pfeil VIII aus Figur 4 ohne das Gehäuseteil der Betätigungseinrichtung,
- Figur 9: eine Draufsicht des Ventils mit Blickrichtung gemäß Pfeil IX aus Figur 5 ohne Darstellung des Gehäuseteils der Betätigungseinrichtung,
- Figur 10: eine perspektivische Einzeldarstellung eines bei dem Ventil der Figuren 1 bis 9 zum Einsatz kommenden ersten Rastelementes,
- Figur 11: in einer perspektivischen Darstellung eine weitere Ausführungsform eines mechanisch betätigbaren Ventils der erfindungsgemäßen Ventilanordnung,
- Figur 12: einen Längsschnitt des Ventils aus Figur 1 gemäß Schnittlinie XII-XII aus Figur 14, wobei das Ventilglied eine erste Schaltstellung einnimmt,
- Figur 13: einen Längsschnitt des Ventils aus Figur 11 gemäß Schnittlinie XIII-XIII aus Figur 15, wobei das Ventilglied eine zweite Schaltstellung einnimmt,
- Figur 14: eine teilweise geschnittene Seitenansicht gemäß Schnittlinie XIV-XIV aus Figur 12,
- Figur 15: eine teilweise geschnittene Seitenansicht gemäß Schnittlinie XV-XV aus Figur 13,
- Figur 16: eine teilweise geschnittene Rückansicht gemäß Schnittlinie XVI-XVI aus Figur 14,
- Figur 17: eine teilweise geschnittene Rückansicht gemäß Schnittlinie XVII-XVII aus Figur 15,
- Figur 18: eine Draufsicht mit Blickrichtung gemäß Pfeil XVIII aus Figur 14 ohne Darstellung des Gehäuseteils der Betätigungseinrichtung,
- Figur 19: eine Draufsicht mit Blickrichtung gemäß Pfeil XIX aus Figur 15 ohne Darstellung des Gehäuseteils der Betätigungseinrichtung, und
- Figur 20: eine perspektivische Einzeldarstellung eines bei dem Ventil der Figuren 11 bis 19 verwendeten ersten Rastelementes.

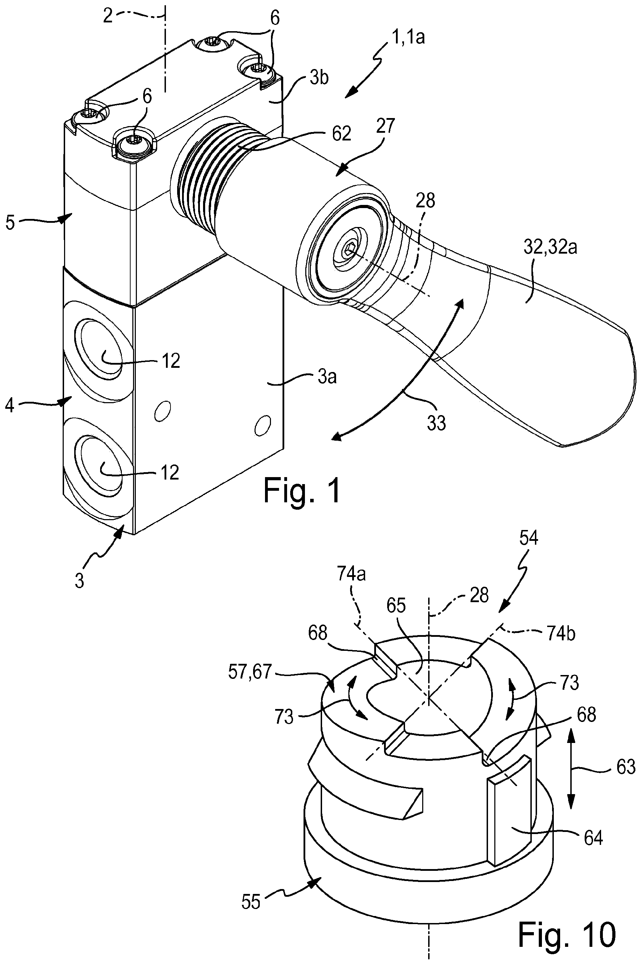

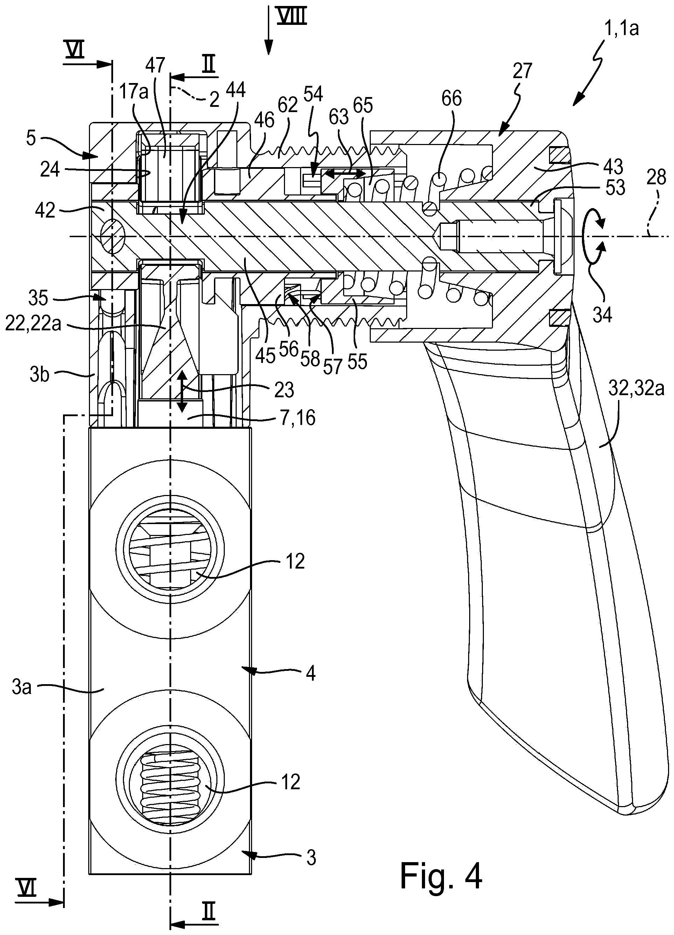

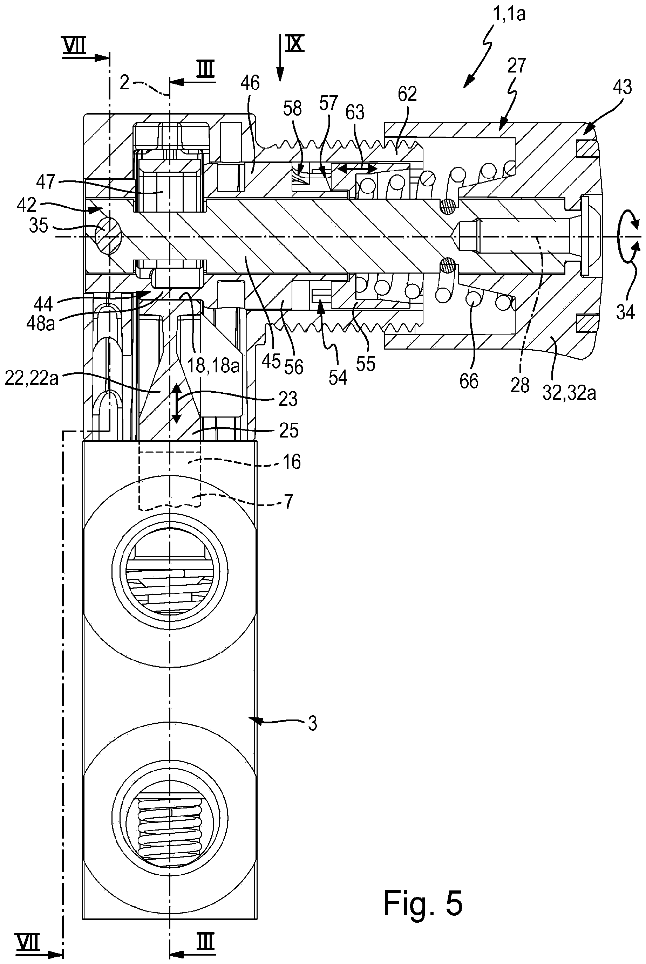

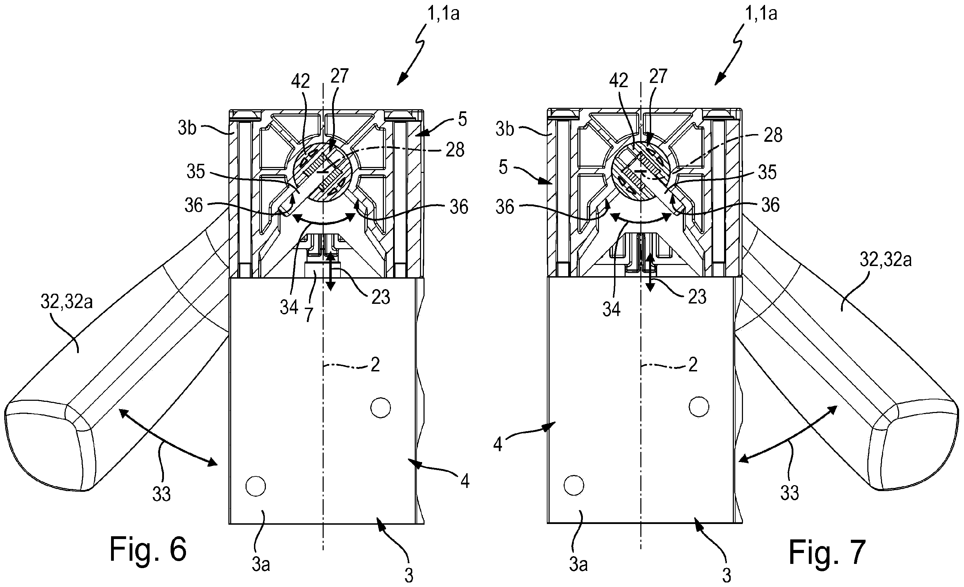

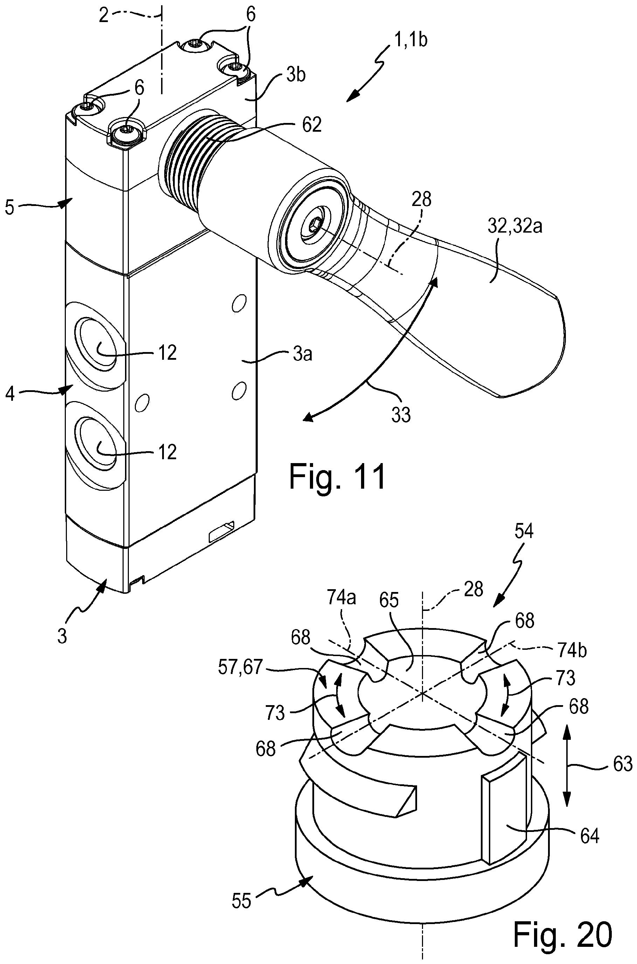

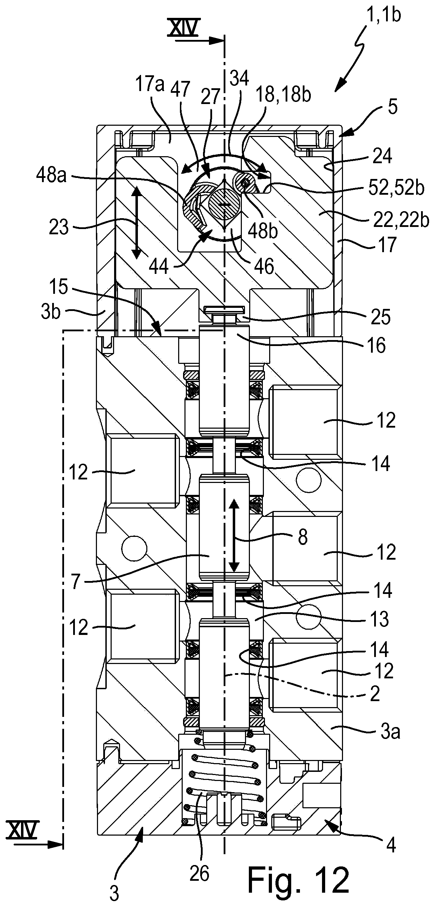

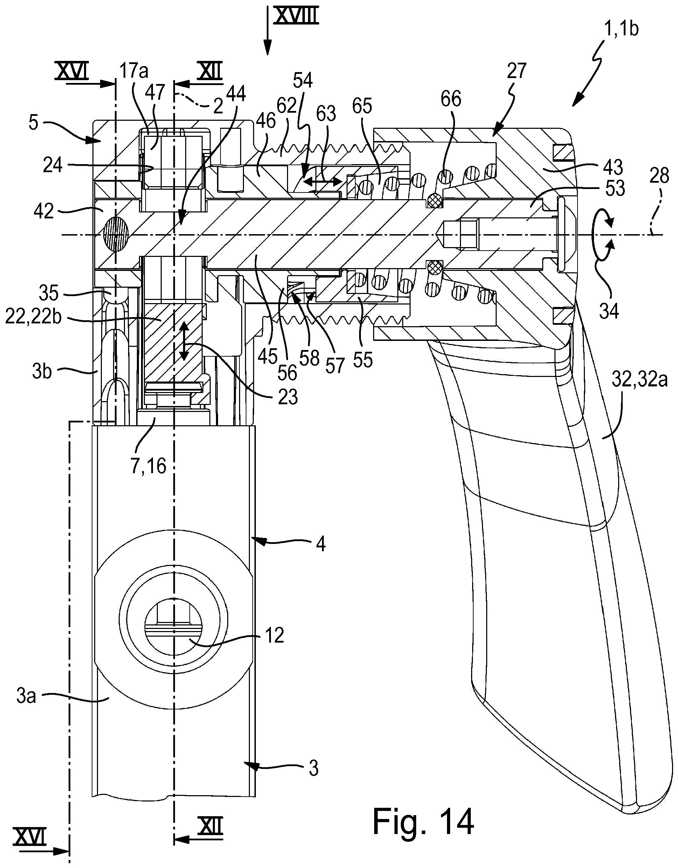

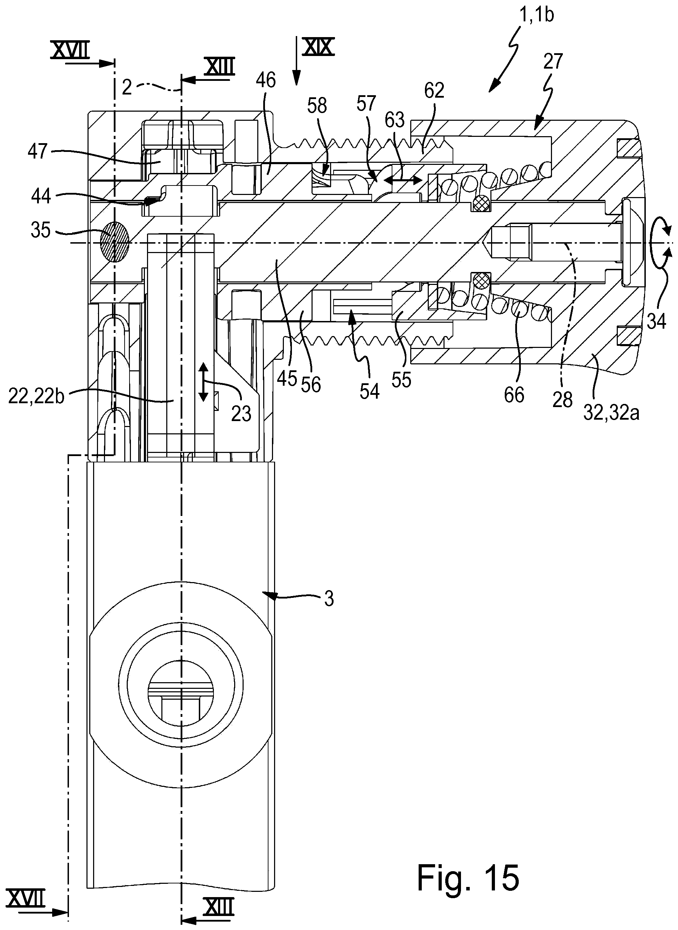

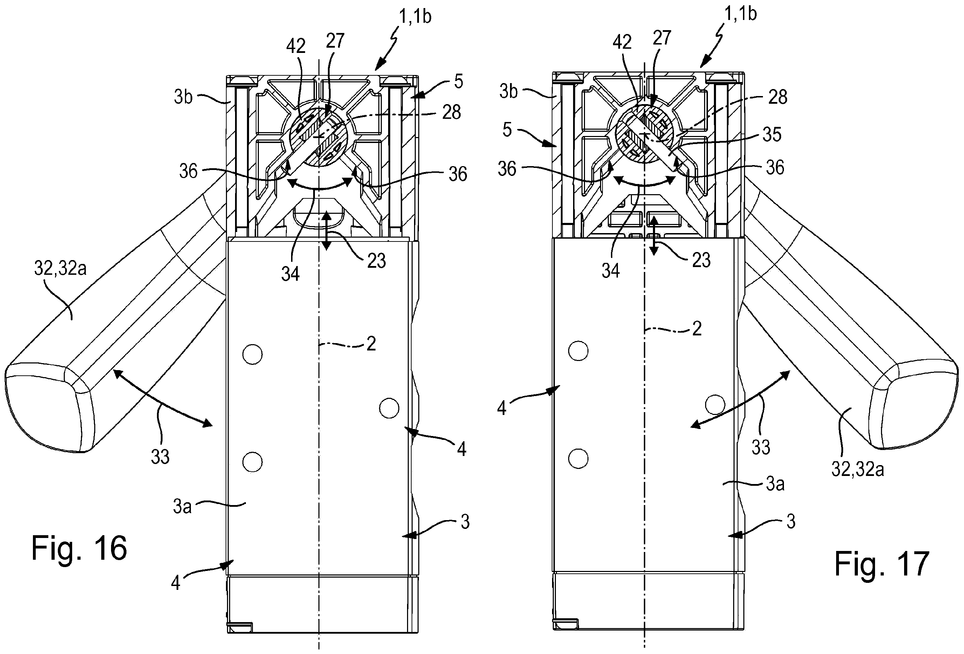

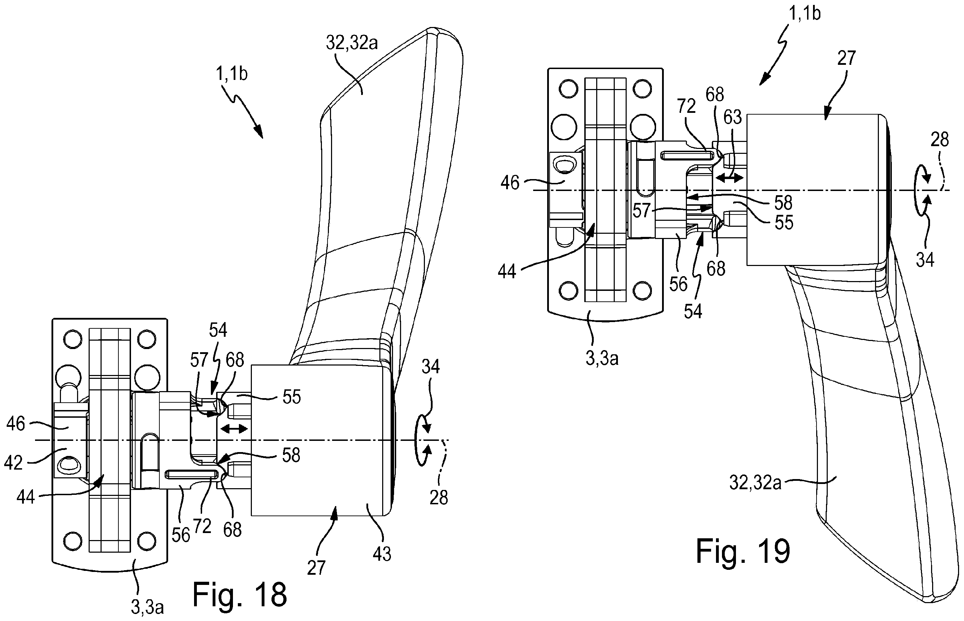

Die aus der Zeichnung ersichtliche Ventilanordnung enthält ein oder mehrere mechanisch betätigbare Ventile 1, wobei die Figuren 1 bis 10 eine bevorzugte erste Ausführungsform eines solchen Ventils 1 und die Figuren 11 bis 20 eine bevorzugte zweite Ausführungsform eines solchen Ventils 1 wiedergeben. Sofern im Einzelfall keine anderslautenden Angaben gemacht werden, bezieht sich die nachfolgende Beschreibung gemeinsam auf sämtliche illustrierten Ausführungsbeispiele.

Das Ventil 1 hat eine Hauptachse 2, bei der es sich insbesondere um die Längsachse des Ventils 1 handelt. Ein Ventilgehäuse 3 des Ventils 1 hat bevorzugt eine mit der Hauptachse 2 zusammenfallende Längsachse.

Das Ventil 1 setzt sich aus einem Steuerteil 4 und einer in Achsrichtung der Hauptachse 2 darauffolgend angeordneten Betätigungseinrichtung 5 zusammen. Die Betätigungseinrichtung 5 ist insbesondere lösbar an dem Steuerteil 4 angebracht, insbesondere mit Hilfe von Befestigungsschrauben 6.

Das Ventilgehäuse 3 hat ein zu dem Steuerteil 4 gehörendes erstes Gehäuseteil 3a und ein zu der Betätigungseinrichtung 5 gehörendes zweites Gehäuseteil 3b. Das zweite Gehäuseteil 3b bildet mit anderen Worten ein Gehäuse der Betätigungseinrichtung 5.

Die Betätigungseinrichtung 5 dient zur Betätigung eines Ventilgliedes 7 des Steuerteils 4. Das Ventilglied 7 ist in Achsrichtung der Hauptachse 2 bewegbar in dem Ventilgehäuse 3 und insbesondere in dem ersten Gehäuseteil 3a angeordnet, wobei die daraus resultierende Linearbewegung des Ventilgliedes 7 als Umschaltbewegung 8 bezeichnet sei, die durch einen Doppelpfeil verdeutlicht ist.

Das Ventilgehäuse 3, insbesondere das erste Gehäuseteil 3a, ist von mehreren Ventilkanälen 12 durchsetzt, die jeweils einerseits zu einer Außenfläche des Ventilgehäuses 3 und andererseits in eine im Ventilgehäuse 3 ausgebildete Ventilkammer 13 einmünden. Im Rahmen der Umschaltbewegung 8 ist das Ventilglied 7 relativ zum Ventilgehäuse 3 in unterschiedlichen Schaltstellungen positionierbar, in denen es in unterschiedlicher Weise mit einem oder mehreren Ventilsitzen 14 zusammenwirkt und dadurch die Ventilkanäle 12 in einem bestimmten Muster miteinander verbindet und voneinander abtrennt.

Das Ventil 1 der Figuren 1 bis 10 ist ein Sitzventil 1a, bei dem mindestens ein Ventilsitz 14 bezogen auf die Umschaltbewegung 8 axial orientiert ist, also in Achsrichtung der Hauptachse 2. Zum Öffnen und Schließen einer Fluidverbindung ist das Ventilglied 7 vom betreffenden Ventilsitz 14 entweder abgehoben oder es sitzt auf diesem Ventilsitz 14 axial auf. Der Hub der Umschaltbewegung 8 zum wahlweisen Öffnen und Verschließen der Fluidverbindung ist bei dem Sitzventil 1a relativ klein.

Das Ventil 1 der Figuren 11 bis 20 ist ein Kolbenschieberventil 1b, bei dem der mindestens eine Ventilsitz 14 bezüglich der Hauptachse 2 radial orientiert ist. Das Schließen und Öffnen einer Fluidverbindung geschieht hier dadurch, dass Längenabschnitte größeren und kleineren Durchmessers des Ventilgliedes 7 abwechselnd axial auf gleicher Höhe mit einem der Ventilsitze 14 positioniert sind, wobei ein in den vom Ventilsitz 14 umschlossenen Bereich eintauchender Längenabschnitt größeren Durchmessers radial an dem betreffenden Ventilsitz 14 anliegt. Ein Kolbenschieberventil 1b hat verglichen mit einem Sitzventil 1a üblicherweise einen größeren Hub der Umschaltbewegung 8 auszuführen, um die Schaltstellung zu verändern.

Abhängig von der Anzahl der Ventilkanäle 12 und der möglichen Schaltstellungen des Ventilgliedes 7 weisen die Ventile 1 unterschiedliche Ventilfunktionalitäten auf. Das Ventil 1 der Figuren 1 bis 10 hat drei Ventilkanäle 12 und ermöglicht zwei Schaltstellungen des Ventilgliedes 7, sodass eine 3/2-Ventilfunktionalität vorliegt. Das Ventil 1 der Figuren 11 bis 20 verfügt über fünf Ventilkanäle und ermöglicht zwei Schaltstellungen des Ventilgliedes 7, sodass eine 5/2-Ventilfunktionalität gegeben ist. Bei dem Ventil der Figuren 11 bis 20 könnte auch noch eine dritte Schaltstellung des Ventilgliedes 7 vorgesehen sein, um eine 5/3-Ventilfunktionalität zu verwirklichen.

An einer in der Achsrichtung der Hauptachse 2 orientierten ersten Stirnfläche 15 des ersten Gehäuseteils 3a ist die Ventilkammer 13 offen, wodurch ein dort befindlicher erster axialer Endabschnitt 16 des Ventilgliedes 7 von der Seite der Betätigungseinrichtung 5 her zugänglich ist.

In einem bevorzugt kastenförmigen Hauptabschnitt 17 des zweiten Gehäuseteils 3b des Ventilgehäuses 3 ist ein eine Antriebskulisse 18 aufweisendes und deshalb als Kulissenschieber 22 bezeichnetes Schieberelement in Achsrichtung der Hauptachse 2 linear verschiebbar gelagert. Die aufgrund der linearen Verschiebbarkeit von dem Kulissenschieber 22 ausführbare Linearbewegung ist durch einen Doppelpfeil verdeutlicht und wird im Folgenden als Antriebsbewegung 23 bezeichnet. Der Hauptabschnitt 17 definiert eine Aufnahmekammer 17a für den Kulissenschieber 22, die im an dem Steuerteil 4 montierten Zustand des zweiten Gehäuseteils 3b durch das Steuerteil 4 verschlossen ist.

Eine oder mehrere Linearführungsstrukturen 24 an der Innenfläche der Wandung des zweiten Gehäuseteils 3b gewährleisten eine verkantungsfreie Verschiebeführung für den Kulissenschieber 22. Bevorzugt ist der Kulissenschieber 22 im Wesentlichen plattenförmig ausgebildet.

Der Kulissenschieber 22 hat einen bevorzugt als Fortsatz ausgebildeten Antriebsabschnitt 25, der bei dem Ventil 1 der Figuren 1 bis 10 an der Stirnfläche des ersten axialen Endabschnittes 16 des Ventilgliedes 7 anliegt. Dadurch kann der Kulissenschieber 22 eine drückende Kraft auf das Ventilglied 7 ausüben. Bei dem Ventil 1 der Figuren 11 bis 20 ist der Antriebsabschnitt 25 in beiden Richtungen der Umschaltbewegung 8 formschlüssig mit dem Ventilglied 7 gekoppelt, sodass der Kulissenschieber 22 sowohl eine drückende als auch eine ziehende Kraft auf das Ventilglied 7 ausüben kann.

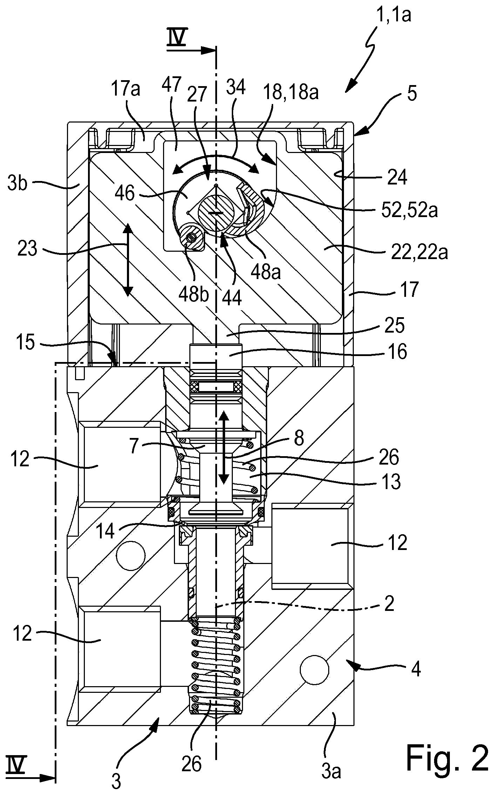

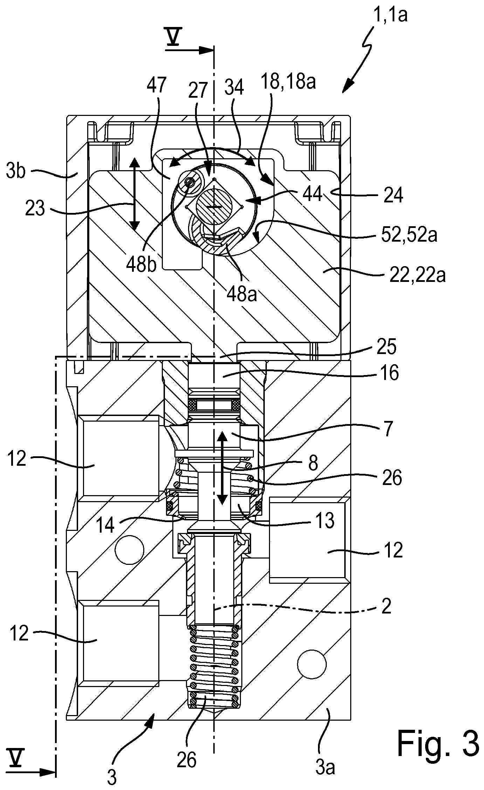

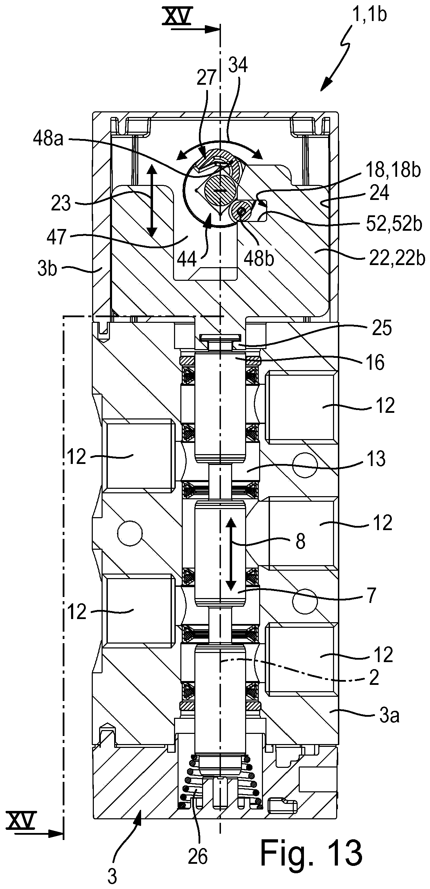

Durch mindestens eine Federeinrichtung 26 des Steuerteils 4 ist das ein- oder mehrteilige Ventilglied 7 bei den illustrierten Ausführungsbeispielen in eine beispielsweise aus Figuren 2, 4, 12 und 14 ersichtliche erste Schaltstellung vorgespannt, in der es weitestmöglich in Richtung zu der Betätigungseinrichtung 5 verlagert ist. Der an dem ersten axialen Endabschnitt 16 anliegende Kulissenschieber 22 nimmt dabei eine von der ersten Stirnfläche 15 abgerückte erste Schieberstellung ein. Wird der Kulissenschieber 22 aus dieser ersten Schieberstellung unter Ausführung der Antriebsbewegung 23 an die erste Stirnfläche 15 des ersten Gehäuseteils 3a angenähert, drückt er auf das Ventilglied 7 und schiebt selbiges unter Überwindung der Federkraft der Federeinrichtung 26 bis zum Erreichen der zweiten Schaltstellung des Ventilgliedes 7 vor sich her. Diese zweite Schaltstellung des Ventilgliedes 7 ist aus Figuren 3 und 13 ersichtlich. Der Kulissenschieber 22 nimmt dabei eine im Vergleich zur ersten Schieberstellung näher an die erste Stirnfläche 15 herangerückte zweite Schieberstellung ein.

Das Ventil 1 des Ausführungsbeispiels der Figuren 1 bis 10 ist vorzugsweise von einem monostabilen Ventiltyp. Wenn der in der zweiten Schieberstellung positionierte Kulissenschieber 22 keine ihn entgegen der Federkraft der Federeinrichtung 26 stabilisierende Antriebskraft erfährt, wird er durch das Ventilglied 7 in die erste Schieberstellung zurückgeschoben, wobei sich das Ventilglied 7 in die erste Schaltstellung zurückbewegt. Das Ventil 1 des Ausführungsbeispiels der Figuren 11 bis 20 ist hingegen von einem bistabilen Ventiltyp und weist zwei stabile Schaltstellungen auf. Auf die Federeinrichtung 26 könnte hier auch verzichtet werden.

Die Umschaltbewegung 8 des Ventilgliedes 7 ist mittels der Betätigungseinrichtung 5 hervorrufbar.

Die Betätigungseinrichtung 5 hat ein bevorzugt mehrteiliges Betätigungsglied 27, das an dem Ventilgehäuse 3 diesbezüglich um eine Drehachse 28 verdrehbar gelagert ist. Das Verdrehen des Betätigungsgliedes 27 ist durch Einleitung einer Betätigungskraft in einen Betätigungsabschnitt 32 des Betätigungsgliedes 27 hervorrufbar. Dieser Betätigungsabschnitt 32 ist vorzugsweise ein bezüglich der Drehachse 28 radial abstehender Handhebel 32a. Er lässt sich mit einer Hand ergreifen, um ein Drehmoment einzuleiten, wobei der Handhebel 32a gemäß Doppelpfeil 33 verschwenkt wird und das Betätigungsglied 27 insgesamt die angesprochene Drehbewegung ausführt, die im Folgenden auch als rotative Eingangsbewegung 34 bezeichnet und in der Zeichnung durch einen Doppelpfeil angedeutet ist.

Die rotative Eingangsbewegung 34 ist in ihrem maximalen Drehwinkel bezüglich des Ventilgehäuses 3 zweckmäßigerweise begrenzt. Hierzu weist das Betätigungsglied 27, bevorzugt innerhalb der Aufnahmekammer 17a, ein radial abstehendes Anschlagelement 35 auf, das bei der rotativen Eingangsbewegung 34 um die Drehachse 28 verschwenkt wird. In seinem Schwenkweg liegen zwei bezüglich des Ventilgehäuses 3 ortsfeste Gegenanschläge 36, die bevorzugt einstückig mit der Wandung des zweiten Gehäuseteils 3b ausgeführt sind und an denen das Anschlagelement 35 zur Vorgabe zweier End-Drehpositionen abwechselnd zur Anlage gelangt.

Die Drehachse 28 ist rechtwinkelig zu der Hauptachse 2 und folglich rechtwinkelig zur Richtung der Umschaltbewegung 8 des Ventilgliedes 7 orientiert. Das Betätigungsglied 27 ragt rechtwinkelig zur Hauptachse 2 vom Ventilgehäuse 3 weg.

Das Betätigungsglied 27 hat einen in Achsrichtung der Drehachse 28 orientierten vorderen Endabschnitt 42 und einen diesbezüglich axial entgegengesetzt orientierten rückwärtigen Endabschnitt 43. Mit seinem vorderen Endabschnitt 42 ist es zur Definition der Drehachse 28 im Ventilgehäuse 3 und dabei zweckmäßigerweise in dem zweiten Gehäuseteil 3b drehbar gelagert. Der rückwärtige Endabschnitt 43 befindet sich außerhalb des Ventilgehäuses 3 und ist insbesondere von dem Betätigungsabschnitt 32 beziehungsweise dem Handhebel 32a gebildet. Das Anschlagelement 35 befindet sich zweckmäßigerweise an dem vorderen Endabschnitt 42.

Durch die rotative Eingangsbewegung 34 des Betätigungsgliedes 27 lässt sich die lineare Umschaltbewegung 8 des Ventilliedes 7 hervorrufen. Hierzu ist das Betätigungsglied 27 mit dem Ventilglied 7 bewegungsgekoppelt. Dabei könnte das Betätigungsglied 27 prinzipiell direkt mit dem Ventilglied 7 zusammenwirken. Von Vorteil ist es jedoch, wenn die erwähnte Bewegungskopplung unter Zwischenschaltung eines Kulissenschiebers 22 der weiter oben schon erwähnten Art erfolgt, der kraftübertragend zwischen einem Abtriebsabschnitt 44 des Betätigungsgliedes 27 und dem ersten axialen Endabschnitt 16 des Ventilgliedes 7 eingegliedert ist.

Das Betätigungsglied 27 hat bevorzugt einen mehrteiligen Aufbau. In diesem Zusammenhang weist es bevorzugt einen zu der Drehachse 28 koaxialen Stangenkörper auf, der im Folgenden als Betätigungsstange 45 bezeichnet wird und auf den ein separater und insbesondere hülsenförmig ausgebildeter Abtriebskörper 46 koaxial aufgesteckt ist. Die Betätigungsstange 45 besteht aus Stabilitätsgründen vorzugsweise aus Metall. Am rückwärtigen Ende der Betätigungsstange 45 ist zweckmäßigerweise der Betätigungsabschnitt 32 befestigt.

Die Betätigungsstange 45 hat zweckmäßigerweise einen dem rückwärtigen Endabschnitt 43 des Betätigungsgliedes 27 zugeordneten Schnittstellenabschnitt 53, an dem der Betätigungsabschnitt 32 in bevorzugt lösbarer Weise drehfest montiert ist. Der Betätigungsabschnitt 32 kann alternativ auch einstückig mit der Betätigungsstange 45 ausgebildet sein.

Der mit dem Kulissenschieber 22 kooperierende Abtriebsabschnitt 44 ist insbesondere ein Bestandteil des Abtriebskörpers 46. Aufgrund einer unrunden und bevorzugt mehreckigen Konturierung des Außenumfanges der Betätigungsstange 45 und der die Betätigungsstange 45 aufnehmenden Bohrung des Abtriebskörpers 46, sind die Betätigungsstange 45 und der Abtriebskörper 46 drehfest miteinander gekoppelt, sodass ein mittels des Betätigungsabschnittes 32 hervorgerufenes Verdrehen der Betätigungsstange 45 ein gleichzeitiges Verdrehen des Abtriebskörpers 46 einschließlich des daran ausgebildeten Abtriebsabschnittes 44 zur Folge hat. Der Abtriebskörper 46 besteht vorzugsweise aus einem Kunststoffmaterial.

Das Anschlagelement 35 ist bevorzugt stiftförmig ausgebildet und in miteinander fluchtende Bohrungen des Abtriebskörpers 46 und der Betätigungsstange 45 eingesetzt, sodass es gleichzeitig die axiale Relativposition zwischen diesen beiden Komponenten 46, 45 fixiert. Das Anschlagelement 35 übernimmt also bevorzugt auch die Funktion eines Sicherungsstiftes.

Bei einem nicht illustrierten Ausführungsbeispiel sind die Funktionen der Betätigungsstange 45 und des Abtriebskörpers 46 in einem insoweit einteiligen und insgesamt aus Kunststoffmaterial bestehenden Betätigungsglied 27 vereinigt.

Das Betätigungsglied 27 durchgreift in dem zweiten Gehäuseteil 3b mit seinem vorderen Endabschnitt 42 eine den Kulissenschieber 22 quer zu der Hauptachse 2 durchsetzende Aussparung 47. Mit in Achsrichtung der Längsachse 28 diesseits und jenseits des Kulissenschiebers 22 befindlichen Längenabschnitten des Abtriebskörpers 46 ist das Betätigungsglied 27 in dem Ventilgehäuse 3 beziehungsweise in dem zweiten Gehäuseteil 3b drehbar gelagert und dadurch auch zuverlässig gegen Kippmomente abgestützt.

Der Abtriebsabschnitt 44 weist mehrere und insbesondere genau zwei exzentrisch bezüglich der Drehachse 28 angeordnete erste und zweite Kraftabgabestrukturen 48a, 48b auf. Über eine dieser beiden Kraftabgabestrukturen 48a, 48b erfolgt jeweils der lineare Antrieb des Kulissenschiebers 22 durch Zusammenwirken mit der an diesem Kulissenschieber 22 ausgebildeten Antriebskulisse 18.

Das Verdrehen des Betätigungsgliedes 27 hat ein Verschwenken der zur Drehachse 28 beabstandeten Kraftabgabestrukturen 48a, 48b um die Drehachse 28 zur Folge, woraus durch Zusammenwirken mit der zugeordneten Antriebskulisse 18 eine Antriebskraft resultiert, durch die der Kulissenschieber 22 aus der ersten Schieberstellung in die zweite Schieberstellung verschiebbar ist. Beim Zurückdrehen des Betätigungsgliedes 27 kehrt der Kulissenschieber 22 entweder gemäß Figuren 1 bis 10 aufgrund der Beaufschlagung seitens der Federeinrichtung 26 oder gemäß Figuren 11 bis 20 ebenfalls durch die aktive Beaufschlagung seitens der wirksamen Kraftabgabestruktur 48a oder 48b wieder in die erste Schieberstellung zurück.

Bei der rotativen Eingangsbewegung 34 des Betätigungsgliedes 27 bewegt sich die der Antriebskulisse 18 zugeordnete Kraftabgabestruktur 48a oder 48b an der Antriebskulisse 18 entlang. Der dabei stattfindende Kontakt bewirkt eine Kraftübertragung von der Kraftabgabestruktur 48a oder 48b auf den Kulissenschieber 22, der seinerseits auf das Ventilglied 7 einwirkt. Von Vorteil ist, dass durch unterschiedliche Gestaltung der Antriebskulisse 18 das beim Verdrehen des Betätigungsgliedes 27 auftretende Bewegungsverhalten des Kulissenschiebers 22 und somit auch das Bewegungsverhalten des mit dem Kulissenschieber 22 bewegungsgekoppelten Ventilgliedes 7 beeinflussbar ist. Es besteht insbesondere die Möglichkeit, durch entsprechende Abstimmung zwischen einer Kraftabgabestruktur 48a, 48b und einer Antriebskulisse 18 den Hub der Umschaltbewegung 8 zu beeinflussen und insbesondere unterschiedliche Hublängen vorzugeben. Die Ventilanordnung verfügt über mehrere unterschiedliche Kulissenschieber 22, die mit abweichend voneinander gestalteten Antriebskulissen 18 ausgestattet sind, die ausgewählt in Kombination mit einem Betätigungsglied 27 nutzbar sind, um einen gewünschten Ventiltyp des mechanisch betätigbaren Ventils 1 zu bilden. Zweckmäßigerweise umfasst die Ventilanordnung gemäß dem Ausführungsbeispiel wenigstens zwei und bevorzugt genau zwei unterschiedliche Kulissenschieber 22, die zur besseren Unterscheidung im Folgenden auch als erster Kulissenschieber 22a und zweiter Kulissenschieber 22b bezeichnet sind, wobei der erste Kulissenschieber 22a eine im Folgenden als erste Antriebskulisse 18a bezeichnete Antriebskulisse 18 aufweist und der zweite Kulissenschieber 22b mit einer im Folgenden als zweite Antriebskulisse 18b bezeichneten Antriebskulisse 18 ausgestattet ist. Die beiden Antriebskulissen 18a, 18b unterscheiden sich in ihrer Formgebung voneinander. Der erste Kulissenschieber 22a ist in dem Ventil 1 gemäß Figuren 1 bis 10 eingebaut, wobei seine erste Antriebskulisse 18a mit der ersten Kraftübertragungsstruktur 48a des Betätigungsgliedes 27 zusammenwirkt. Der zweite Kulissenschieber 22b ist in das Ventil 1 der Figuren 11 bis 20 eingebaut, wobei die an ihm ausgebildete zweite Antriebskulisse 18b mit der zweiten Kraftabgabestruktur 48b des Betätigungsgliedes 27 kooperiert.

Die beiden Kraftabgabestrukturen 48a, 48b sind mit Abstand zueinander um die Drehachse 48 herum verteilt angeordnet. Bei der rotativen Eingangsbewegung 34 bewegen sie sich daher auf einer Kreisbahn um die Drehachse 28. Um beim Zusammenbau des Ventils 1 die angestrebte Zuordnung zwischen einerseits einer der beiden Kraftabgabestrukturen 48a, 48b und der Antriebskulisse 18 des eingebauten Kulissenschiebers 22 zu erreichen, wird das Betätigungsglied 27 mit voneinander abweichender drehwinkelmäßiger Ausrichtung installiert. Nimmt der Kulissenschieber 22 die erste Schieberstellung ein, unterscheiden sich also die Drehwinkelstellungen der Betätigungsglieder 27 voneinander, wenn sie gemäß Figuren 1 bis 10 mit dem ersten Kulissenschieber 22a oder gemäß Figuren 11 bis 20 mit dem zweiten Kulissenschieber 22b kombiniert sind. Gleichwohl ist ein und derselbe Typ von Betätigungsglied 27 zur Kombination mit beiden Kulissenschiebern 22a, 22b geeignet. In Abhängigkeit von der gewählten Kombination lassen sich die unterschiedlichen Ventiltypen des mechanisch betätigbaren Ventils 1 vorgeben.

Anstatt wie beim Ausführungsbeispiel das Betätigungsglied 27 mit einer der Anzahl unterschiedlicher Kulissenschieber 22a, 22b entsprechenden Anzahl von Kraftabgabestrukturen 48a, 48b auszustatten, besteht die alternative Möglichkeit, an dem Betätigungsglied 27 nur eine einzige Kraftabgabestruktur vorzusehen, die in der Lage ist, mit den Antriebskulissen 18a, 18b jedes Kulissenschiebers 22a, 22b zu kooperieren. Ferner besteht die Möglichkeit, an dem Betätigungsglied 27 mehrere Montagepositionen vorzusehen, an denen ein und dieselbe Kraftabgabestruktur alternativ montierbar ist, je nachdem, mit welcher Antriebskulisse 18a, 18b eine Kooperation gewünscht ist.

Wenn das Betätigungsglied 27 mit mehreren Kraftabgabestrukturen 48a, 48b ausgestattet ist, sind diese zweckmäßigerweise bezogen auf die Längsrichtung der Drehachse 28 auf gleicher axialer Höhe des Betätigungsgliedes angeordnet.

Die Kraftabgabestrukturen 48a, 48b können beispielsweise bolzenförmig oder stiftförmig ausgeführt sein. Exemplarisch ist die zweite Kraftabgabestruktur 48b mit einem zylindrischen Querschnitt versehen. Hiervon abweichende Formgebungen sind aber ebenfalls möglich, beispielsweise entsprechend der illustrierten ersten Kraftabgabestruktur 48a mit einem bogenförmigen und beispielsweise U-förmigen Querschnitt.

Bevorzugt ist die Antriebskulisse 18 von einer die Aussparung 47 des Kulissenschiebers 22 begrenzenden Randfläche 52 gebildet. Durch unterschiedliche Gestaltung dieser Randfläche 52 lassen sich sehr variabel unterschiedlichste Antriebskulissen 18 definieren.

Bei dem Ventil der Figuren 1 bis 10 ist die Antriebskulisse 18 von einem zumindest partiell bogenförmig gekrümmten Flächenabschnitt 52a der Randfläche 52 gebildet. Beim Verdrehen des Betätigungsgliedes 27 gleitet die erste Kraftabgabestruktur 48a an diesem bogenförmigen Flächenabschnitt 52a entlang und überträgt dadurch eine die Antriebsbewegung 23 hervorrufende Antriebskraft auf den ersten Kulissenschieber 22a.

Bei dem Ventil 1 der Figuren 11 bis 20 ist die zweite Antriebskulisse 18b von einer kerbenartigen Vertiefung 52b der Randfläche 52 der Aussparung 47 gebildet, in die die zweite Kraftabgabestruktur 48b eingreift. Diese zweite Kraftabgabestruktur 48b verbleibt bei der rotativen Eingangsbewegung 34 stets innerhalb der kerbenartigen Vertiefung 52b und verlagert sich lediglich in der Tiefenrichtung dieser kerbenartigen Vertiefung 52b. Dabei übt sie je nach Drehrichtung auf die eine oder andere Flanke der kerbenartigen Vertiefung 52b eine Antriebskraft aus, was zur Folge hat, dass der zweite Kulissenschieber 22b je nach Drehrichtung der rotativen Eingangsbewegung 34 aktiv in Richtung der ersten Schieberstellung oder in Richtung der zweiten Schieberstellung verlagert wird. Indem bei diesem Ventiltyp des Ventils 1 der Antriebsabschnitt 25 mit dem ersten axialen Endabschnitt 16 des Ventilgliedes in beiden axialen Richtungen bewegungsgekoppelt ist, ist der zweite Kulissenschieber 22b in der Lage, sowohl schiebende als auch ziehende Antriebskräfte auf das Ventilglied 7 zu übertragen, das folglich auch ohne eine Federeinrichtung 26 zwischen verschiedenen Schaltstellungen umschaltbar ist. Diese Ausgestaltung der Antriebskulisse 18 ist besonders vorteilhaft in Verbindung mit einem multistabilen und dabei insbesondere bistabilen Ventiltyp.

Es ist von Vorteil, wenn die Betätigungseinrichtung 5 mit einem Rastmechanismus 54 ausgestattet ist, der in der Lage ist, mindestens eine der Schaltstellungen des Ventilgliedes 7 ohne direktes Zusammenwirken mit diesem Ventilglied 7 lösbar zu fixieren. Bei der illustrierten Ventilanordnung sind sämtliche Ventile 1 mit einem solchen Rastmechanismus 54 ausgestattet.

Der Rastmechanismus 54 ist zwischen das Betätigungsglied 27 und das Ventilgehäuse 3 eingegliedert. Er enthält zwei lösbar verrastend miteinander kooperierende erste und zweite Rastelemente 55, 56, die in axialer Aufeinanderfolge koaxial zu der Drehachse 28 angeordnet sind. Die beiden Rastelemente 55, 56 haben einander zugewandte Stirnflächen, die im Falle des ersten Rastelementes 55 eine erste Rastmittelstruktur 57 und im Falle des zweiten Rastelementes 56 eine zweite Rastmittelstruktur 58 aufweisen.

Das mit der ersten Rastmittelstruktur 57 ausgestattete erste Rastelement 55 ist bezüglich der Drehachse 28 unverdrehbar, zugleich aber in Achsrichtung der Drehachse 28 verschiebbar am Ventilgehäuse 3 und exemplarisch an dem zweiten Gehäuseteil 3b angeordnet. Das zweite Gehäuseteil 3b weist bevorzugt einen zu der Drehachse 28 koaxialen und rechtwinkelig von der Hauptachse 2 wegragenden hohlzylindrischen Führungsfortsatz 62 auf, in dem das erste Rastelement 55 unter gleichzeitiger Verdrehsicherung linear verschiebbar geführt ist. Die dabei mögliche Linearbewegung des ersten Rastelementes 55 sei als Hubbewegung 63 bezeichnet und ist durch einen Doppelpfeil angedeutet.

Das erste Rastelement 55 ist zweckmäßigerweise zwischen dem Kulissenschieber 22 und dem Betätigungsabschnitt 32 platziert. Es ist insbesondere so ausgerichtet, dass seine erste Rastmittelstruktur 57 zu dem Kulissenschieber 22 weist.

Das die zweite Rastmittelstruktur 58 aufweisende zweite Rastelement 56 ist an dem Betätigungsglied 57 diesbezüglich unverdrehbar angeordnet, sodass es die rotative Eingangsbewegung 34 des Betätigungsgliedes 27 stets mitmacht. Es ist zudem in Achsrichtung der Drehachse 28 unbeweglich. Das zweite Rastelement 56 ist auf der dem Betätigungsabschnitt 32 axial entgegengesetzten Seite des ersten Rastelementes 55 platziert und sitzt im Falle eines mit einem Kulissenschieber 22 ausgestatteten Ventils 1 zweckmäßigerweise zwischen diesem Kulissenschieber 22 und dem ersten Rastelement 55. Die zweite Rastmittelstruktur 58 weist dabei in Achsrichtung der Drehachse 28 von dem Kulissenschieber 22 weg.

Für die unverdrehbare und zugleich verschiebbare Lagerung des ersten Rastelementes 55 sind beim Ausführungsbeispiel zwei an einander diametral entgegengesetzten Außenflächenabschnitten des bevorzugt hülsenförmigen ersten Rastelementes 55 angeordnete Führungsrippen 64 vorhanden, die sich in der Längsrichtung des ersten Rastelementes 55 erstrecken und die in komplementäre Führungsnuten am Innenumfang des Führungsfortsatzes 62 eingreifen. Von den Führungsrippen 64 ist in den Figuren 10 und 20 nur eine sichtbar. Die komplementären Führungsnuten liegen in der Zeichnung außerhalb der Schnittebenen und sind deshalb nicht sichtbar.

Das erste Rastelement 55 hat zentral eine bohrungsartige Durchbrechung 65, durch die das Betätigungsglied 27 spielbehaftet und frei drehbar hindurchgreift.

Auch das drehfest am Betätigungsglied 27 angeordnete zweite Rastelement 56 ist zweckmäßigerweise in dem hohlzylindrischen Führungsfortsatz 62 angeordnet. Somit kann sich der gesamte Rastmechanismus 54 kompakt innerhalb des hülsenförmigen Führungsfortsatzes 62 befinden.

Das zweite Rastelement 56 ist zweckmäßigerweise ein integraler Bestandteil des Abtriebskörpers 46. Beim Ausführungsbeispiel sind zur Bildung des Abtriebskörpers 46 dessen Abtriebsabschnitt 44 und das zweite Rastelement 56 einstückig miteinander ausgebildet.

Zu dem Rastmechanismus 54 gehörende Federmittel 66 wirken ständig mit einer Federkraft auf das linear bewegliche erste Rastelement 55 ein und drücken dieses mit der ersten Rastmittelstruktur 57 voraus gegen die zweite Rastmittelstruktur 58 des axial unbeweglich fixierten zweiten Rastelementes 56. Dadurch ist eine ständige axiale Anlage zwischen den beiden Rastmittelstrukturen 57, 58 gewährleistet. Wird das Betätigungsglied 27 zu der rotativen Eingangsbewegung 34 angetrieben, verdreht sich das zweite Rastelement 56 bezüglich des unverdrehbar fixierten ersten Rastelementes 55, wobei die zweite Rastmittelstruktur 58 an der mit ihr in Kontakt stehenden ersten Rastmittelstruktur 57 entlanggleitet. Die Federmittel 66 erlauben es dabei dem ersten Rastelement 55, sich entsprechend den Konturen der beiden Rastmittelstrukturen 57, 58 unter Überwindung der Federkraft der Federmittel 66 zu bewegen und die Hubbewegung 63 auszuführen. Dabei verändert es abhängig von den Konturen der beiden Rastmittelstrukturen 57, 58 seine bezüglich des zweiten Rastelementes 55 eingenommene Axialposition, was im Rahmen der hin und her gehenden Hubbewegung 63 stattfinden kann.

Bei nicht illustrierten Ausführungsbeispielen ist das erste Rastelement 55 axial unbeweglich, während das zweite Rastelement 56 die Hubbewegung 63 ausführen kann, oder es sind beide Rastelemente 55, 56 so ausgebildet, dass sie unabhängig voneinander eine Hubbewegung 63 durchführen können.

Die Federmittel 66 sind bevorzugt zwischen dem axial beweglichen ersten Rastelement 55 und dem Betätigungsglied 27 eingegliedert. Exemplarisch sitzen sie koaxial auf der das erste Rastelement 55 durchsetzenden Betätigungsstange 45, wobei sie sich axial einerseits an der Rückseite des ersten Rastelementes 55 und andererseits an dem Betätigungsabschnitt 32 abstützt. Die Federmittel 66 bestehen zweckmäßigerweise aus einer Schraubendruckfeder, die bevorzugt kegelförmig gestaltet ist.

Die beiden Rastmittelstrukturen 57, 58 sind so aufeinander abgestimmt, dass durch sie eine oder mehrere Drehpositionen des Betätigungsgliedes 27 und somit mittelbar auch eine oder mehrere Schaltstellungen des Ventilgliedes 7 lösbar fixierbar sind. Bei dem Ventil 1 der Figuren 1 bis 10 ist nur eine Drehposition lösbar verrastet, was damit zusammenhängt, dass dieses Ventil 1 in monostabiler Bauart ausgeführt ist. Hiervon abweichend sind bei dem Ventil 1 der Figuren 11 bis 20 zwei Drehpositionen des Betätigungsgliedes 27 lösbar verrastbar, sodass dieses Ventil 1 über ein bistabiles Umschaltverhalten verfügt.

Wie insbesondere aus den Figuren 10 und 20 ersichtlich ist, besteht die beim ersten Rastelement 55 ausgebildete erste Rastmittelstruktur 57 zweckmäßigerweise aus einer sich bevorzugt konzentrisch um die Drehachse 28 herum erstreckenden, axial orientierten Gleitfläche 67. Diese Gleitfläche 67 ist so konzipiert, dass sie mindestens eine in der Achsrichtung der Drehachse 28 vertiefte Rastvertiefung 68 definiert. An der Gleitfläche 67 liegt mindestens ein axial vorstehender Rastvorsprung 72 an, der Bestandteil der zum zweiten Rastelement 56 gehörenden zweiten Rastmittelstruktur 58 ist. Jeder Rastvorsprung 72 liegt stirnseitig an der Gleitfläche 67 an, an der er beim Verdrehen des Betätigungsgliedes 27 entlanggleitet. Diese Gleitbewegung 73 ist in den Figuren 10 und 20 durch Doppelpfeile angedeutet.

Liegen sich ein Rastvorsprung 72 und eine Rastvertiefung 68 axial gegenüber, ist ein Rasteingriff gegeben, durch den die momentane Drehposition des Betätigungsgliedes und dadurch indirekt auch die daraus resultierende Schaltstellung des Ventilgliedes 7 lösbar fixiert ist. Wird ausgehend hiervon das Betätigungsglied 27 verdreht, rastet der Rastvorsprung 72 unter Überwindung der Federkraft der Federmittel 66 aus der zugeordneten Rastvertiefung 68 heraus und bewegt sich entlang des sich daran anschließenden Längenabschnittes der Gleitfläche 67, bis entweder die Drehbewegung durch das Anschlagelement 35 und die Gegenanschläge 36 gestoppt wird oder bis der Rastvorsprung 72 in eine weitere Rastvertiefung 68 einrastet.

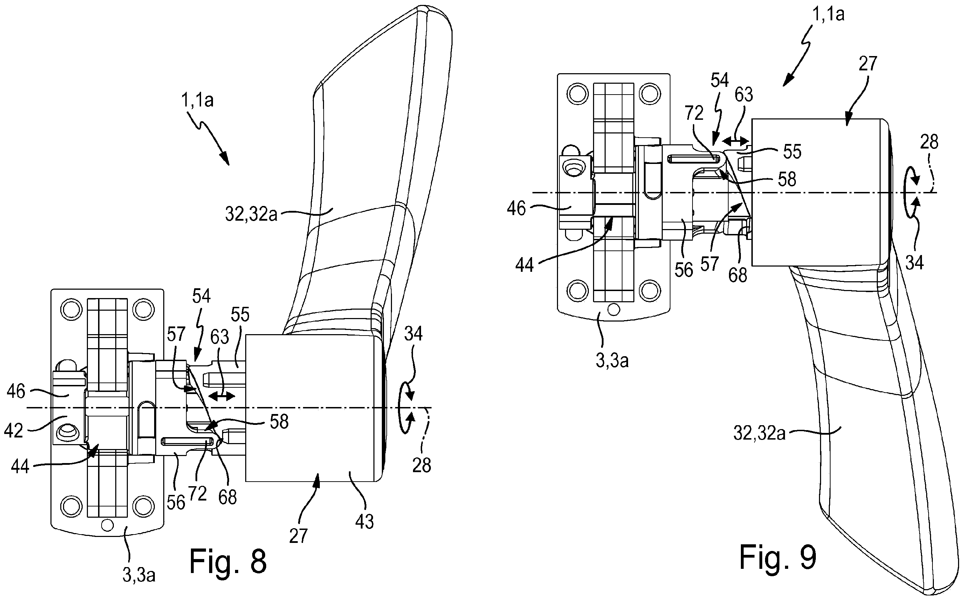

Wie insbesondere aus den Figuren 8, 9, 18 und 19 ersichtlich ist, sind die Rastvorsprünge 72 bevorzugt so gestaltet, dass sie sich an der der Gleitfläche 67 zugewandten Stirnseite verjüngen, sodass es sich bei ihrem Kontakt mit der Gleitfläche 67 um einen nur sehr schmalen linienförmigen Kontakt handelt.

Beim Ausführungsbeispiel sind die Rastvertiefungen 68 und die Rastvorsprünge 72 jeweils paarweise vorhanden, sodass das erste Rastelement 55 wenigstens ein Paar von Rastvertiefungen 68 aufweist, die sich an bezüglich der Drehachse 28 diametral gegenüberliegenden Stellen der Gleitfläche 67 befinden. In entsprechender Weise enthält die zweite Rastmittelstruktur 58 wenigstens ein und bevorzugt genau ein Paar von Rastvorsprüngen 72, die ebenfalls an sich bezüglich der Drehachse 28 diametral gegenüberliegenden Stellen an dem zweiten Rastelement 56 ausgebildet sind. Auf diese Weise wird erreicht, dass unabhängig von der Drehposition des Betätigungsgliedes 27 eine symmetrische axiale Zweipunktabstützung zwischen den beiden Rastelementen 55, 56 vorliegt, was den Rastvorgang begünstigt.

In den Figuren 10 und 20 sind durch jeweils zwei strichpunktierte Linien 74a, 74b zwei mögliche Positionen illustriert, in denen die hier nicht illustrierten Rastvorsprünge 72 in zwei möglichen rotativen Relativpositionen der beiden Rastelemente 55, 56 an der Gleitfläche 67 anliegen. Beim Ausführungsbeispiel der Figur 10 handelt es sich dabei im einen Fall (74a) um eine verrastete und im anderen Fall (74b) um eine unverrastete Drehposition. Die Gleitfläche 67 ist dabei zwischen diesen beiden Drehpositionen rampenförmig ansteigend ausgebildet und die Rastvertiefung 68 ist von einer Abstufung im Längsverlauf der Gleitfläche 67 definiert. Bei dem Ausführungsbeispiel der Figur 20 sind beide Drehpositionen 74a, 74b verrastete Drehpositionen, in denen die Rastvorsprünge 72 jeweils mit einer der Rastvertiefungen 68 in lösbarem Rasteingriff stehen. Während sich die erste Rastmittelstruktur 57 gemäß Figur 10 insbesondere zur Realisierung eines monostabilen Betriebsverhaltens eignet, ist die erste Rastmittelstruktur 57 gemäß Figur 20 für ein bistabiles Umschaltverhalten ausgelegt.

Abgesehen von den beiden illustrierten Formgebungen der Gleitflächen 67 sind noch weitere Formgebungen möglich, die sich darauf auswirken, ob das Betriebsverhalten monostabil oder bistabil ist und wie viele verrastbare Drehpositionen möglich sind. Außerdem kann durch die Wahl geneigter Flächenabschnitte der Gleitfläche 67 darauf Einfluss genommen werden, dass sich das Betätigungsglied 27 nach dem Loslassen des Betätigungsabschnittes 32 aufgrund der Federkraft der Federmittel 66 selbsttätig in eine Grundstellung zurückdreht.

Die Anordnung der Rastvertiefungen 68 und der Rastvorsprünge 72 kann bezüglich der beiden Rastelemente 55, 56 auch vertauscht sein.

Um Ventile unterschiedlichen Ventiltyps nach Bedarf herstellen zu können, verfügt die Ventilanordnung bevorzugt über mehrere erste Rastelemente 55 und/oder mehrere zweite Rastelemente 56, die sich in der Ausgestaltung der ersten und/oder zweiten Rastmittelstrukturen 57, 58 voneinander unterscheiden und die alternativ installiert werden können. Auf diese Weise lassen sich sehr einfach Ventile mit unterschiedlichem Betriebsverhalten zusammenbauen, was sich dadurch äußert, dass unterschiedliche Schaltstellungen und/oder ein unterschiedliches Umschaltverhalten bezüglich des Ventilgliedes 7 vorgebbar sind.

Die mehreren vorhandenen ersten und/oder zweiten Rastelemente 55, 56 erlauben auch eine problemlose Umrüstung ein und desselben Ventils hinsichtlich eines unterschiedlichen Betriebsverhaltens. So kann beispielsweise durch Austausch des ersten und/oder zweiten Rastelementes 55, 56 ein monostabiles Ventil 1 in ein bistabiles Ventil 1 umgerüstet werden, oder umgekehrt.

Vorzugsweise bleibt die erste Rastmittelstruktur 57 mit ihrem mindestens einen Rastvorsprung 72 immer die gleiche und wird nicht ausgetauscht. Das unterschiedliche Betriebsverhalten lässt sich dann einfach durch einen Austausch des zweiten Rastelementes 56 realisieren.

## Patentansprüche

1. Ventilanordnung, mit mindestens einem mechanisch betätigbaren Ventil (1), das ein in einem Ventilgehäuse (3) angeordnetes, unter Ausführung einer linearen Umschaltbewegung (8) in Achsrichtung einer Hauptachse (2) zwischen verschiedenen Schaltstellungen umschaltbares Ventilglied (7) aufweist und das über eine Betätigungseinrichtung (5) verfügt, die ein mechanisch zu einer rotativen Eingangsbewegung (34) um eine zu der Hauptachse (2) rechtwinkelige Drehachse (28) antreibbares Betätigungsglied (27) aufweist, das zur Erzeugung der linearen Umschaltbewegung (8) des Ventilgliedes (7) mit dem Ventilglied (7) bewegungsgekoppelt ist und einen die rotative Eingangsbewegung (34) mitmachenden Abtriebsabschnitt (44) aufweist, der mindestens eine zur Erzeugung der Umschaltbewegung (8) mit dem Ventilglied (7) antriebsmäßig zusammenwirkende, bezüglich der Drehachse (28) exzentrisch angeordnete Kraftabgabestruktur (48a, 48b) aufweist, wobei die Betätigungseinrichtung (5) einen kraftübertragend zwischen den Abtriebsabschnitt (44) und das Ventilglied (7) eingegliederten, in Achsrichtung der Hauptachse (2) relativ zum Ventilgehäuse (3) bewegbaren Kulissenschieber (22, 22a, 22b) aufweist, der mindestens eine Antriebskulisse (18, 18a, 18b) aufweist, mit der eine Kraftabgabestruktur (48a, 48b) des Abtriebsabschnittes (44) des Betätigungsgliedes (27) zur Erzeugung einer von der rotativen Eingangsbewegung (34) abgeleiteten und in Achsrichtung der Hauptachse (2) orientierten linearen Antriebsbewegung (23) des Kulissenschiebers (22, 22a, 22b) zusammenwirkt, aus der die Umschaltbewegung (8) des Ventilgliedes (7) resultiert, wobei abhängig von der Gestaltung der Antriebskulisse (18, 18a, 18b) des Kulissenschiebers (22, 22a, 22b) ein bei der rotativen Eingangsbewegung (34) des Betätigungsgliedes (27) unterschiedliches Bewegungsverhalten des Kulissenschiebers (22, 22a, 22b) und somit des durch den Kulissenschieber (22) angetriebenen Ventilgliedes (7) hervorrufbar ist, **dadurch gekennzeichnet, dass** die Ventilanordnung mehrere Kulissenschieber (22, 22a, 22b) mit voneinander abweichend gestalteten Antriebskulissen (18, 18a, 18b) enthält, die abhängig vom Ventiltyp des mechanisch betätigbaren Ventils (1) alternativ verwendbar sind, um ein unterschiedliches Bewegungsverhalten des jeweils zugehörigen Ventilgliedes (7) hervorzurufen.

2. Ventilanordnung nach Anspruch 1, **dadurch gekennzeichnet, dass** der Abtriebsabschnitt (44) mehrere, jeweils exzentrisch zu der Drehachse (28) angeordnete Kraftabgabestrukturen (48a, 48b) aufweist und die Ventilanordnung über mehrere sich in der Ausgestaltung ihrer Antriebskulisse (18, 18a, 18b) voneinander unterscheidende Kulissenschieber (22, 22a, 22b) verfügt, wobei die Kraftabgabestrukturen (48a, 48b) und die Kulissenschieber (22, 22a, 22b) zur Bildung unterschiedlicher Ventiltypen des mechanisch betätigbaren Ventils (1) in unterschiedlicher Auswahl miteinander kombinierbar sind.

3. Ventilanordnung nach Anspruch 1 oder 2, **dadurch gekennzeichnet, dass** der Abtriebsabschnitt (44) eine erste und eine zweite, jeweils exzentrisch zu der Drehachse (28) angeordnete Kraftabgabestruktur (48a, 48b) aufweist und die Ventilanordnung über zwei sich in der Ausgestaltung ihrer Antriebskulisse (18, 18a, 18b) voneinander unterscheidende erste und zweite Kulissenschieber (22, 22a, 22b) verfügt, wobei zur Bildung zweier unterschiedlicher Ventiltypen des mechanisch betätigbaren Ventils (1) die erste Kraftabgabestruktur (48a) mit dem ersten Kulissenschieber (22, 22a) und die zweite Kraftabgabestruktur (48b) mit dem zweiten Kulissenschieber (22, 22b) kombinierbar sind.

4. Ventilanordnung nach einem der Ansprüche 1 bis 3, **dadurch gekennzeichnet, dass** der Abtriebsabschnitt (44) zur alternativen Kombination mit unterschiedlichen Kulissenschiebern (22, 22a, 22b) in bezüglich der Drehachse (28) des Betätigungsgliedes (27) unterschiedlichen Drehwinkelpositionen im Ventilgehäuse (3) installierbar oder installiert ist.

5. Ventilanordnung nach einem der Ansprüche 1 bis 4, **dadurch gekennzeichnet, dass** die mehreren Kraftabgabestrukturen (48a, 48b) bezogen auf die Längsrichtung der Drehachse (28) auf gleicher axialer Höhe des Betätigungsgliedes (27) und dort in der Umfangsrichtung dieser Drehachse (28) versetzt zueinander angeordnet sind.

6. Ventilanordnung nach einem der Ansprüche 1 bis 5, **dadurch gekennzeichnet, dass** mindestens eine Kraftabgabestruktur (48a) des Abtriebsabschnittes (44) einen zylindrischen Querschnitt hat.

7. Ventilanordnung nach einem der Ansprüche 1 bis 6, **dadurch gekennzeichnet, dass** der Kulissenschieber (22, 22a, 22b) eine Aussparung (47) aufweist, in die das Betätigungsglied (27) mit seinem Abtriebsabschnitt (44) quer zur Achsrichtung der Hauptachse (2) hineinragt, wobei eine Randfläche (52) der Aussparung (47) die Antriebskulisse (18, 18a, 18b) bildet.

8. Ventilanordnung nach Anspruch 7, **dadurch gekennzeichnet, dass** die Antriebskulisse (18, 18a) von einem zumindest partiell bogenförmig gekrümmten Flächenabschnitt (52a) der Randfläche (52) der Aussparung (47) gebildet ist, an der die zugeordnete Kraftabgabestruktur (48a) bei der rotativen Eingangsbewegung (34) des Betätigungsgliedes (27) entlanggleitet und dabei eine die Antriebsbewegung (23) hervorrufende Antriebskraft auf den Kulissenschieber (22, 22a) überträgt.

9. Ventilanordnung nach Anspruch 7 oder 8, **dadurch gekennzeichnet, dass** die Antriebskulisse (18, 18b) von einer kerbenartigen Vertiefung (52b) der Randfläche (52) der Aussparung (47) gebildet ist, in die die zugeordnete Kraftabgabestruktur (48b) derart eingreift, dass sie bei beiden Drehrichtungen des Betätigungsgliedes (27) eine die Antriebsbewegung (23) hervorrufende Antriebskraft auf den Kulissenschieber (22, 22b) übertragen kann, sodass der Kulissenschieber (22, 22b) durch das Betätigungsglied (27) abhängig von dessen Drehrichtung aktiv in zwei einander entgegengesetzten axialen Richtungen verschiebbar ist.

10. Ventilanordnung nach einem der Ansprüche 1 bis 9, **dadurch gekennzeichnet, dass** mindestens ein mechanisch betätigbares Ventil (1) ein Sitzventil (1a) ist, dessen Ventilglied (7) mit mindestens einem axial in Richtung der Umschaltbewegung (8) orientierten Ventilsitz (14) zusammenwirkt.

11. Ventilanordnung nach einem der Ansprüche 1 bis 10, **dadurch gekennzeichnet, dass** mindestens ein mechanisch betätigbares Ventil (1) ein Kolbenschieberventil (1b) ist, dessen Ventilglied (7) mit mindestens einem bezüglich der Richtung der Umschaltbewegung (8) radial orientierten Ventilsitz (14) zusammenwirkt.

12. Ventilanordnung nach einem der Ansprüche 1 bis 11, **dadurch gekennzeichnet, dass** das Betätigungsglied (27) mindestens eines mechanisch betätigbaren Ventils (1) einen bezüglich der Drehachse (28) radial abstehenden Handhebel (32a) zur manuellen Erzeugung der rotativen Eingangsbewegung (34) aufweist.

13. Ventilanordnung nach Anspruch 12, **dadurch gekennzeichnet, dass** der Handhebel (32a) an einer Betätigungsstange (45) des Betätigungsgliedes (27) befestigt ist, die drehfest in einen mit dem Ventilglied (7) bewegungsgekoppelten hülsenförmigen Abtriebskörper (46) des Betätigungsgliedes (27) eingesteckt ist, der den Abtriebsabschnitt (44) bildet.

14. Ventilanordnung nach einem der Ansprüche 1 bis 13, **dadurch gekennzeichnet, dass** das Betätigungsglied (27) ein radial abstehendes Anschlagelement (35) aufweist, das zur Vorgabe mindestens einer End-Drehposition des Betätigungsgliedes (27) mit einem am Ventilgehäuse (3) angeordneten Gegenanschlag (36) zusammenwirken kann.

15. Ventilanordnung nach einem der Ansprüche 1 bis 14, **dadurch gekennzeichnet, dass** die Betätigungseinrichtung (5) einen mindestens eine der Schaltstellungen des Ventilgliedes (7) lösbar fixierenden Rastmechanismus (54) aufweist, der über zwei zu der Drehachse (28) koaxiale erste und zweite Rastelemente (55, 56) verfügt, die an ihren einander axial zugewandten Stirnseiten über miteinander kooperierende erste und zweite Rastmittelstrukturen (57, 58) verfügen, die zwecks gegenseitigem Eingriff durch Federmittel (66) ständig axial aneinander angedrückt sind, wobei das die erste Rastmittelstruktur (57) aufweisende erste Rastelement (55) unverdrehbar am Ventilgehäuse (3) angeordnet ist und wobei das die zweite Rastmittelstruktur (58) aufweisende Rastelement (56) unverdrehbar am Betätigungsglied (27) angeordnet ist, sodass es die rotative Eingangsbewegung (34) des Betätigungsgliedes (27) mitmacht und die beiden Rastmittelstrukturen (57, 58) bei Ausführung der rotativen Eingangsbewegung (34) aneinander abgleiten, wobei wenigstens eines der beiden Rastelemente (55, 56) entgegen der Federkraft der Federmittel (66) unter Ausführung einer Hubbewegung (63) in Achsrichtung der Drehachse (28) verschiebbar ist, sodass seine bezüglich des anderen Rastelementes (56, 55) eingenommene Axialposition durch das Zusammenwirken der bei der rotativen Eingangsbewegung (34) des Betätigungsgliedes (27) aneinander abgleitenden Rastmittelstrukturen (57, 58) veränderbar ist.

16. Ventilanordnung nach einem der Ansprüche 1 bis 15, **dadurch gekennzeichnet, dass** das Ventilgehäuse (3) mehrteilig ausgebildet ist und ein das Ventilglied (7) aufnehmendes erstes Gehäuseteil (3a) sowie ein daran befestigtes zweites Gehäuseteil (3b) aufweist, wobei in dem zweiten Gehäuseteil (3b) das Betätigungsglied (27) drehbar gelagert ist.

## Claims

1. Valve assembly comprising at least one mechanically actuable valve (1), which has a valve member (7) switchable between various switching positions while performing a linear switch-over movement (8) in the axial direction of a main axis (2) and which is provided with an actuating device (5) having an actuating member (27), which can be driven mechanically to perform a rotational input movement (34) around an axis of rotation (28) perpendicular to the main axis (2) and which is motion-coupled to the valve member (7) for generating the linear switch-over movement (8) of the valve member (7) and has an output section (44), which joins in the rotational input movement (34) and which has at least one power output structure (48a, 48b), which acts together in terms of drive with the valve member (7) to generate the switch-over movement (8) and is arranged eccentrically relative to the axis of rotation (28), wherein the actuating device (5) has a gate slide (22, 22a, 22b), which is incorporated in a power-transmitting manner between the output section (44) and the valve member (7), is movable relative to the valve housing (3) in the axial direction of the main axis (2) and is provided with at least one drive gate (18, 18a, 18b), with which a power output structure (48a, 48b) of the output section (44) acts together to generate a linear drive movement (23) of the gate slide (22, 22a, 22b), which is derived from the rotational input movement (34) and oriented in the axial direction of the main axis (2) and from which the switch-over movement (8) of the valve member (7) results, wherein, depending on the design of the drive gate (18, 18a, 18b) of the gate slide (22, 22a, 22b), a different movement behaviour of the gate slide (22, 22a, 22b) and thus of the valve member (7) driven by the gate slide (22) can be induced in the rotational input movement (34) of the actuating member (27), **characterised in that** the valve assembly comprises a plurality of gate slides (22, 22a, 22b) with drive gates (18, 18a, 18b) of different designs which, depending on the valve type of the mechanically actuable valve (1), can be used alternatively to induce a different movement behaviour of the respective associated valve member (7).

2. Valve assembly according to claim 1, **characterised in that** the output section (44) has a plurality of power output structures (48a, 48b), each being arranged eccentrically relative to the axis of rotation (28), and **in that** the valve assembly is provided with a plurality of gate slides (22, 22a, 22b) differing from one another in the design of their drive gates (18, 18a, 18b), wherein the power output structures (48a, 48b) and the gate slides (22, 22a, 22b) can be combined in different selections to form different valve types of the mechanically actuable valve (1).

3. Valve assembly according to claim 1 or 2, **characterised in that** the output section (44) has a first and a second power output structure (48a, 48b), each being arranged eccentrically relative to the axis of rotation (28), and **in that** the valve assembly is provided with first and second gate slides (22, 22a, 22b) differing from one another in the design of their drive gates (18, 18a, 18b), wherein the first power output structure (48a) can be combined with the first gate slide (22, 22a) and the second power output structure (48b) can be combined with the second gate slide (22, 22b) to form two different valve types of the mechanically actuable valve (1).

4. Valve assembly according to any of claims 1 to 3, **characterised in that** the output section (44) can be or is installed into the valve housing (3) in different rotary angle positions relative to the axis of rotation (28) of the actuating member (27) for alternative combination with different gate slides (22, 22a, 22b).

5. Valve assembly according to any of claims 1 to 4, **characterised in that** the plurality of power output structures (48a, 48b) are located at the same axial height of the actuating member (27) relative to the longitudinal direction of the axis of rotation (28) and are arranged there with an offset in the circumferential direction of said axis of rotation (28).

6. Valve assembly according to any of claims 1 to 5, **characterised in that** at least one power output structure (48a) of the output section (44) has a cylindrical cross-section.

7. Valve assembly according to any of claims 1 to 6, **characterised in that** the gate slide (22, 22a, 22b) has a recess (47), into which the actuating member (27) projects with its output section (44) at right angles to the axial direction of the main axis (2), an edge surface (52) of the recess (47) forming the drive gate (18, 18a, 18b).

8. Valve assembly according to claim 7, **characterised in that** the drive gate (18, 18a) is represented by an at least partially arcuate surface section (52a) of the edge surface (52) of the recess (47), where the associated power output structure (48a) slides along in the rotational input movement (34) of the actuating member (27) while transmitting a driving force inducing the drive movement (23) to the gate slide (22, 22a).

9. Valve assembly according to claim 7 or 8, **characterised in that** the drive gate (18, 18b) is represented by a notch-like recess (52b) of the edge surface (52) of the recess (47), with which recess (52) the associated power output structure (48b) engages in such a way that it can transmit a driving force inducing the drive movement (23) to the gate slide (22, 22b) in both directions of rotation of the actuating member (27), so that the gate slide (22, 22b) can be actively displaced in two mutually opposite axial directions by the actuating member (27), depending on the direction of rotation thereof.

10. Valve assembly according to any of claims 1 to 9, **characterised in that** at least one mechanically actuable valve (1) is a seated valve (1a), the valve member (7) of which acts together with at least one valve seat (14) oriented axially in the direction of the switch-over movement (8).

11. Valve assembly according to any of claims 1 to 10, **characterised in that** at least one mechanically actuable valve (1) is a sliding spool valve (1b), the valve member (7) of which acts together with at least one valve seat (14) oriented radially relative to the direction of the switch-over movement (8).

12. Valve assembly according to any of claims 1 to 11, **characterised in that** the actuating member (27) of at least one mechanically actuable valve (1) has a hand lever (32a) projecting radially relative to the axis of rotation (28) for the manual generation of the rotational input movement (34).

13. Valve assembly according to claim 12, **characterised in that** the hand lever (32a) is secured to an actuating rod (45) of the actuating member (27), which actuating rod (45) is non-rotatably inserted into a sleeve-shaped output body (46) of the actuating member (27), which output body (46) is motion-coupled to the valve member (7) and forms the output section (44).

14. Valve assembly according to any of claims 1 to 13, **characterised in that** the actuating member (27) has a radially projecting stop element (35), which can act together with a mating stop (36) on the valve housing (3) for presetting at least one rotary end position of the actuating member (27).

15. Valve assembly according to any of claims 1 to 14, **characterised in that** the actuating device (5) has a latching mechanism (54), which releasably fixes at least one of the switching positions of the valve member (7) and is provided with two first and second latching elements (55, 56), which are coaxial with the axis of rotation (28) and have at their axially facing ends mutually cooperating first and second latching means structures (57, 58), which are constantly pushed together axially by spring means (66) for mutual engagement, wherein the first latching element (55) having the first latching means structure (57) is non-rotatably located on the valve housing (2) and wherein the second latching element (56) having the second latching means structure (58) is non-rotatably located on the actuating member (27), so that it joins the rotational input movement (34) of the actuating member (27) and the two latching means structures (57, 58) slide on each other when performing the rotational input movement (34), wherein at least one of the two latching elements (55, 56) is displaceable in the axial direction of the axis of rotation (28) against the spring force of the spring means (66) while performing a stroking movement, so that its axial position adopted relative to the other latching element (56, 55) can be changed by the cooperation of the latching means structures (57, 58) sliding on each other during the rotational input movement (34) of the actuating member (27).

16. Valve assembly according to any of claims 1 to 15, **characterised in that** the valve housing (3) is of a multi-part design and has a first housing part (3a) accommodating the valve member (7) and a second housing part (3b) secured to the former, the actuating member (27) being rotatably mounted in the second housing part (3b).

## Revendications

1. Ensemble formant soupape, comprenant au moins une soupape (1) pouvant être actionnée de manière mécanique, laquelle présente un organe de soupape (7) disposé dans un carter de soupape (3), pouvant être commuté entre différentes positions de commutation en exécutant un déplacement de commutation (8) linéaire dans un sens axial d'un axe principal (2) et laquelle dispose d'un dispositif d'actionnement (5), qui présente un organe d'actionnement (27) pouvant être entraîné autour d'un axe de rotation (28) perpendiculaire par rapport à l'axe principal (2) de manière mécanique en un déplacement d'entrée (34) rotatif, lequel organe d'actionnement est couplé en déplacement à l'organe de soupape (7) afin de générer le déplacement de commutation (8) linéaire de l'organe de soupape (7) et présente une section de sortie (44) accompagnant le déplacement d'entrée (34) rotatif, laquelle section de sortie présente au moins une structure d'émission de force (48a, 48b) coopérant en entraînement avec l'organe de soupape (7) afin de générer le déplacement de commutation (8), disposée de manière excentrique par rapport à l'axe de rotation (28), dans lequel le dispositif d'actionnement (5) présente un poussoir à coulisse (22, 22a, 22b) intégré par transmission de force entre la section de sortie (44) et l'organe de soupape (7), pouvant être déplacé dans le sens axial de l'axe principal (2) par rapport au carter de soupape (3), lequel poussoir à coulisse présente au moins une coulisse d'entraînement (18, 18a, 18b), avec laquelle une structure d'émission de force (48a, 48b) de la section de sortie (44) de l'organe d'actionnement (27) coopère afin de générer un déplacement d'entraînement (23) linéaire du poussoir à coulisse (22, 22a, 22b) dérivé du déplacement d'entrée (34) rotatif et orienté dans le sens axial de l'axe principal (2), duquel déplacement d'entraînement résulte le déplacement de commutation (8) de l'organe de soupape (7), dans lequel un comportement de déplacement, différent lors du déplacement d'entrée (34) rotatif de l'organe d'actionnement (27), du poussoir à coulisse (22, 22a, 22b) et ainsi de l'organe de soupape (7) entraîné par le poussoir à coulisse (22) peut être provoqué en fonction de la configuration de la coulisse d'entraînement (18, 18a, 18b) du poussoir à coulisse (22, 22a, 22b), **caractérisé en ce que** l'ensemble formant soupape contient plusieurs poussoirs à coulisse (22, 22a, 22b) pourvus de coulisses d'entraînement (18, 18a, 18b) configurées de manière divergente les unes des autres, lesquelles peuvent être utilisées en variante en fonction du type de soupape de la soupape (1) pouvant être actionnée de manière mécanique afin de provoquer un comportement de déplacement différent de l'organe de soupape (7) respectivement associé.

2. Ensemble formant soupape selon la revendication 1, **caractérisé en ce que** la section de sortie (44) présente plusieurs structures d'émission de force (48a, 48b) disposées respectivement de manière excentrique par rapport à l'axe de rotation (28), et l'ensemble formant soupape dispose de plusieurs poussoirs à coulisse (22, 22a, 22b) se distinguant les uns des autres dans la configuration de leur coulisse d'entraînement (18, 18a, 18b), dans lequel les structures d'émission de force (48a, 48b) et les poussoirs à coulisse (22, 22a, 22b) peuvent être combinés les uns les autres selon une sélection différente afin de former différents types de soupape de la soupape (1) pouvant être actionnée de manière mécanique.

3. Ensemble formant soupape selon la revendication 1 ou 2, **caractérisé en ce que** la section de sortie (44) présente une première et une deuxième structure d'émission de force (48a, 48b) disposées respectivement de manière excentrique par rapport à l'axe de rotation (28), et l'ensemble formant soupape dispose de deux premiers et deuxièmes poussoirs à coulisse (22, 22a, 22b) se distinguant les uns des autres dans la configuration de leur coulisse d'entraînement (18, 18a, 18b), dans lequel la première structure d'émission de force (48a) pourvue du premier poussoir à coulisse (22, 22a) et la deuxième structure d'émission de force (48b) pourvue du deuxième poussoir à coulisse (22, 22b) peuvent être combinées afin de former deux types de soupape différents de la soupape (1) pouvant être actionnée de manière mécanique.

4. Ensemble formant soupape selon l'une quelconque des revendications 1 à 3, **caractérisé en ce que** la section de sortie (44) peut être installée ou est installée dans le carter de soupape (3) dans des positions angulaires rotatives différentes par rapport à l'axe de rotation (28) de l'organe d'actionnement (27) aux fins de la combinaison alternative avec des poussoirs à coulisse (22, 22a, 22b) différents.

5. Ensemble formant soupape selon l'une quelconque des revendications 1 à 4, **caractérisé en ce que** les nombreuses structures d'émission de force (48a, 48b) sont disposées par rapport au sens longitudinal de l'axe de rotation (28) à la même hauteur axiale de l'organe d'actionnement (27) et, à cet endroit, de manière décalée les unes par rapport aux autres dans le sens périphérique dudit axe de rotation (28).

6. Ensemble formant soupape selon l'une quelconque des revendications 1 à 5, **caractérisé en ce qu'**au moins une structure d'émission de force (48a) de la section de sortie (44) a une section transversale cylindrique.

7. Ensemble formant soupape selon l'une quelconque des revendications 1 à 6, **caractérisé en ce que** le poussoir à coulisse (22, 22a, 22b) présente un évidement (47), dans lequel l'organe d'actionnement (27) dépasse par sa section de sortie (44) de manière transversale par rapport au sens axial de l'axe principal (2), dans lequel une surface de bord (52) de l'évidement (47) forme la coulisse d'entraînement (18, 18a, 18b).

8. Ensemble formant soupape selon la revendication 7, **caractérisé en ce que** la coulisse d'entraînement (18, 18a) est formée par une section de surface (52a), incurvée de manière à présenter au moins en partie une forme arquée, de la surface de bord (52) de l'évidement (47), au niveau de laquelle la structure d'émission de force (48a) associée est guidée dans le sens de la longueur lors du déplacement d'entrée (34) rotatif de l'organe d'actionnement (27) et transfère dans ce cadre sur le poussoir à coulisse (22, 22a) une force d'entraînement provoquant le déplacement d'entraînement (23).

9. Ensemble formant soupape selon la revendication 7 ou 8, **caractérisé en ce que** la coulisse d'entraînement (18, 18b) est formée par un renfoncement (52b) de type encoche de la surface de bord (52) de l'évidement (47), avec lequel la structure d'émission de force (48b) associée vient en prise de telle manière qu'elle peut transférer sur le poussoir à coulisse (22, 22b) une force d'entraînement provoquant le déplacement d'entraînement (23) dans les deux sens de rotation de l'organe d'actionnement (27) si bien que le poussoir à coulisse (22, 22b) peut être coulissé dans deux sens axiaux opposés l'un à l'autre de manière active par l'organe d'actionnement (27) en fonction de son sens de rotation.

10. Ensemble formant soupape selon l'une quelconque des revendications 1 à 9, **caractérisé en ce qu'**au moins une soupape (1) pouvant être actionnée de manière mécanique est une soupape à siège (1a), dont l'organe de soupape (7) coopère avec au moins un siège de soupape (14) orienté axialement dans le sens du déplacement de commutation (8).

11. Ensemble formant soupape selon l'une quelconque des revendications 1 à 10, **caractérisé en ce qu'**au moins une soupape (1) pouvant être actionnée de manière mécanique est une soupape à poussoir à piston (1b), dont l'organe d'actionnement (7) coopère avec au moins un siège de soupape (14) orienté de manière radiale par rapport au sens du déplacement de commutation (8).

12. Ensemble formant soupape selon l'une quelconque des revendications 1 à 11, **caractérisé en ce que** l'organe d'actionnement (27) d'au moins une soupape (1) pouvant être actionnée de manière mécanique présente un levier manuel (32a) dépassant de manière radiale par rapport à l'axe de rotation (28), servant à générer de manière manuelle le déplacement d'entrée (34) rotatif.

13. Ensemble formant soupape selon la revendication 12, **caractérisé en ce que** le levier manuel (32a) est fixé au niveau d'une tige d'actionnement (45) de l'organe d'actionnement (27), laquelle est enfichée de manière solidaire en rotation dans un corps de sortie (46) en forme de douille couplé en déplacement avec l'organe de soupape (7), de l'organe d'actionnement (27), lequel corps de sortie forme la section de sortie (44).

14. Ensemble formant soupape selon l'une quelconque des revendications 1 à 13, **caractérisé en ce que** l'organe d'actionnement (27) présente un élément de butée (35) dépassant de manière radiale, lequel peut coopérer avec une contre-butée (36) disposée au niveau du carter de soupape (3) afin de spécifier au moins une position de rotation finale de l'organe d'actionnement (27).

15. Ensemble formant soupape selon l'une quelconque des revendications 1 à 14, **caractérisé en ce que** le dispositif d'actionnement (5) présente un mécanisme d'enclenchement (54) fixant de manière amovible au moins une des positions de commutation de l'organe de soupape (7), lequel mécanisme d'enclenchement dispose de deux premiers et deuxièmes éléments d'enclenchement (55, 56) coaxiaux par rapport à l'axe de rotation (28), lesquels disposent, au niveau de leurs côtés frontaux tournés de manière axiale les uns vers les autres, de premières et de secondes structures de moyen d'enclenchement (57, 58) coopérant entre elles, lesquelles sont pressées les unes contre les autres en permanence de manière axiale aux fins de la prise mutuelle par des moyens de ressort (66), dans lequel le premier élément d'enclenchement (55) présentant la première structure de moyen d'enclenchement (57) est disposé au niveau du carter de soupape (3) sans pouvoir tourner et dans lequel l'élément d'enclenchement (56) présentant la seconde structure de moyen d'enclenchement (58) est disposé au niveau de l'organe d'actionnement (27) sans pouvoir tourner, si bien que l'élément d'enclenchement accompagne le déplacement d'entrée (34) rotatif de l'organe d'actionnement (27) et les deux structures de moyens d'enclenchement (57, 58) glissent l'une contre l'autre lors de l'exécution du déplacement d'entrée (34) rotatif, dans lequel au moins un des deux éléments d'enclenchement (55, 56) peut être coulissé à l'encontre de la force de ressort des moyens de ressort (66) en exécutant un déplacement de levage (63) dans le sens axial de l'axe de rotation (28) si bien que sa position axiale adoptée par rapport à l'autre élément d'enclenchement (56, 55) peut être modifiée par la coopération des structures de moyen d'enclenchement (57, 58) glissant l'une contre l'autre lors du déplacement d'entrée (34) rotatif de l'organe d'actionnement (27).

16. Ensemble formant soupape selon l'une quelconque des revendications 1 à 15, **caractérisé en ce que** le carter de soupape (3) est réalisé en plusieurs parties et présente une première partie de carter (3a) logeant l'organe de soupape (7) ainsi qu'une deuxième partie de carter (3b) fixée au niveau de la première, dans lequel l'organe d'actionnement (27) est logé de manière à pouvoir tourner dans la deuxième partie de carter (3b).
